# EUROPEAN PATENT SPECIFICATION

(11) **EP 3 559 400 B1**
(45) Date of publication and mention of the grant of the patent: **01.02.2023**
(21) Application number: 17822758.3
(22) Date of filing: 21.12.2017
(51) Int. Cl.: E21B 34/08, E21B 34/10, E21B 34/00

(54) **DOWNHOLE APPARATUS AND METHODS**
BOHRLOCHVORRICHTUNG UND -VERFAHREN
APPAREIL DE FOND DE TROU ET PROCÉDÉS

(30) Priority: 23.12.2016 GB 201622213
(43) Date of publication of application: 30.10.2019
(73) Proprietor: CORETRAX GLOBAL LIIMITED, Aberdeen AB12 4YA (GB)
(72) Inventor: CHURCHILL, Andrew Philip, Cove Aberdeen AB12 3RY (GB)
(74) Representative: Shanks, Andrew
(86) International application number: PCT/GB2017/053853
(87) International publication number: WO 2018/115882

(56) References cited:
- WO-A1-2016/133541
- WO-A2-2006/000799
- US-A- 3 071 151
- US-A- 3 749 119
- US-A- 3 826 309
- US-A1- 2013 075 111
- US-A1- 2016 138 365

## Description

### FIELD OF THE DISCLOSURE

This disclosure relates to downhole apparatus and methods. Aspects of the disclosure relate to a check or float valve, and in particular but not exclusively to a check or float valve which may be initially maintained in an inactive or dormant condition and reconfigured to an active condition when desired. Aspects of the disclosure also relate to a hydraulic control or switch which may have utility in downhole operations. Aspects of the disclosure also relate to a downhole apparatus and method, wherein the apparatus is at least partially severed.

### BACKGROUND OF THE DISCLOSURE

In the oil and gas exploration and extraction industry, wells are drilled from surface to access subsurface hydrocarbon-bearing formations. The drilling of the bores is typically accomplished by mounting a drill bit on the distal end of a tubular support member, such as a string of jointed drill pipe, which drill pipe string may be thousands of metres long. During a drilling operation drilling fluid, or "mud", is pumped from the surface through the string to cool and lubricate the drill bit, support the wall of the drilled bore, and to carry drill cuttings to the surface, via the annulus between the drill string and the surrounding bore wall. The drilling fluid will normally exit the string through jetting nozzles in the drill bit. During the drilling operation the fluid pressure within the string is normally higher than the pressure in the annulus. However if, for example, the bore intersects a high pressure formation, the pressure in the bore may increase, known as a "kick", and there may be tendency for fluid to flow in an uncontrolled manner up the inside of the drill string. To avoid this possibility, it is currently considered best practice to provide one or more check or float valves within the drill string. These normally-closed valves open to permit flow of fluid down through the string but will remain closed to prevent reverse flow. An example of such a valve in described in US Patent No 4,622,993. However, the presence of such a valve prevents the string from "self-filling", that it is not possible for fluid to flow into the string as the string is tripped into the fluid-filled borehole. Accordingly, to prevent collapse of the string due to surrounding hydrostatic pressure, it is necessary to "top-fill" the drill string as it is tripped into the bore, which involves pumping a volume of fluid into the drill string through the open upper end of the string.

To reduce the requirement for top-filing, valves have been developed in which the valves are initially held open. For example, flapper type valves are available in which a sprung latch initially holds the flapper partially open, allowing self-filling. However, as soon as any fluid is pumped through the string, for example, a shallow test of the flow activated tools in the bottom hole assembly (BHA), or to ensure that the jetting nozzles and the drill bit are not blocked, the flapper will open, releasing the latch, such that the flapper closes when the pumps are turned off. The drill string must then be top filled for the remainder of the tripping operation.

Float valves which remain open when fluid is pumped through the string are described in WO 2013/079926 and WO 2014/140553.

While a drill string incorporating such a valve is being made up and run into a fluid-filled bore, the float valves are initially maintained in an inactive or fully open configuration. This allows the drill string to "self-fill", that is fluid in the bore may flow into the string through the jetting nozzles in the drill bit Pumping fluid through the string does not affect the valves, that is the valves remain fully open. Before drilling commences the float valves are activated, typically by dropping or pumping an activating device into the valve, so that they are available to prevent reverse flow.

US3826309A discloses a well safety valve having a valve for engaging an annular valve seat for opening and closing the valve and operated by a sliding tube telescopically movable in the body and positioned below the valve. Upward movement of the tube opens the valve and downward movement of the tube closes the valve. The tube is normally biased upwardly for holding the valve open and a piston arrangement is connected to the tube and in communication with the exterior of the valve for moving the tube downwardly for closing the valve on an increase in pressure exteriorly of the valve. A flapper valve is pivotally connected to the body below the valve seat and is movable upwardly into engagement with the seat for closing the valve and movable downwardly away from the seat for opening the valve.

WO2016133541A discloses a differential fill valve assembly for application in float collars or shoes in a well casing. The valve assembly includes a backpressure flapper valve and an activating sleeve slidably disposed within a housing. The activating sleeve initially maintains the flapper valve in an open position. The activating sleeve provides at least one ramp on an inner surface thereof. Fluid flow through the activating sleeve generates a pressure differential across the activating sleeve that produces a net force on the activating sleeve to drive the activating sleeve downward, releasing the backpressure flapper valve.

US2016138365 discloses a method and systems for opening and closing a subsurface valve. A rod piston forms a first piston chamber, a second piston chamber and a third piston chamber within a housing. The first piston chamber is fluidically coupled to a high tubing pressure and the second piston chamber is fluidically coupled to a surface control line and a first compartment of a storage chamber. The third piston chamber is coupled to a second compartment of the storage chamber. A flow tube couples the rod piston to a flapper. The rod piston is moved between a first position and a second position in response to a change in a pressure in at least one of the first piston chamber, the second piston chamber and the third piston chamber. The movement of the rod piston between the first position and the second position at least one of opens and closes the flapper.

US3749119A describes another example of a pressure actuated downhole safety valve.

### SUMMARY OF THE DISCLOSURE

The invention is defined in the attached claims.

Aspects of the present disclosure relate to downhole apparatus and methods.

An aspect of the present disclosure relates to downhole apparatus comprising:
a tubular body for incorporation in a tubing string;
at least one float valve mounted in the tubular body and operable to prevent flow up though the tubular body; and
a float valve retainer maintaining the float valve in an inoperable configuration and permitting flow up through the tubular body until the retainer is exposed to a selected absolute pressure and is reconfigured to permit operation of the float valve.

The float valve retainer may comprise a flow restriction to permit creation of a pressure differential across the restriction and reconfiguring of the retainer to permit operation of the float valve, the flow restriction having an inoperable configuration and an operable configuration to permit creation of the pressure differential, the flow restriction maintaining the inoperable configuration until exposed to the selected absolute pressure.

Another aspect of the present disclosure relates to a downhole method comprising:
(a) running a tubing string part-way into a bore with a float valve in the tubing string maintained in an inoperable configuration and permitting fluid to flow from the bore into the tubing string;
(b) pumping fluid down the tubing string and through the float valve while the valve remains in the inoperable configuration;
(c) exposing the float valve to a selected absolute pressure to reconfigure the float valve to an operable configuration and preventing flow from flowing from the bore into the tubing string.

The method may be carried out in the order of the steps recited above.

The tubing string may be run or tripped further into the bore between steps (b) and (c).

The method may further comprise:
reconfiguring a flow restriction associated with the float valve from an inoperable configuration to an operable configuration in response to the selected absolute pressure; and
pumping fluid down the tubing string to create a pressure differential across the flow restriction and thereby reconfiguring the float valve to the operable configuration.

The tubing string may be run or tripped further into the bore between reconfiguring the flow restriction and pumping fluid down the tubing string to create a pressure differential across the flow restriction.

The method may comprise, at step (c) pumping fluid into the tubing string to increase the pressure in the tubing string to provide the absolute pressure.

Running the tubing string into the bore with the float valve in an inoperable or open configuration allows the tubing string to self-fill and provides the operator with the ability to pump fluid down through the tubing string without activating the float valve. This allows the operator to carry out shallow-hole testing of apparatus mounted in the tubing string without activating the float valve, and to subsequently run the tubing string further into the bore with the tubing string continuing to self-fill.

Typically, at least two float valves will be provided. The float valves may be operated or controlled independently, or may be operated or controlled in combination, for example in combination with a single float valve retainer.

The operative float valve may be normally-closed, and the float valve may be biased towards a closed configuration.

In the closed configuration, flow down through the tubing string will tend to open the valve, whereas flow up though the tubing string is prevented by the closed valve. In the no-flow condition, the float valve remains closed.

In the inoperative configuration, the flow restriction may be retracted, for example the flow restriction may be located or positioned to a side of the tubular body, out of a flow path through the tubular body.

In the operative configuration the flow restriction may extend into a flow path through the tubular body.

Alternatively, or in addition, in the inoperative configuration the flow restriction may be isolated from, or fixed relative to, an element of the float valve retainer, and in the operative configuration the flow restriction may be operatively associated with the element of the float valve retainer. For example, the flow restriction may comprise an activating device such as a ball or dart. In the inoperative configuration the activating device may be fixed or restrained in the tubular body above the float valve, with fluid bypass provided around the activating device. On exposure to the selected absolute pressure the activating device may be released and may then be free to translate to land on a profile or seat operatively associated with the float valve. When the activating device engages the seat a pressure differential may be created across the activating device and seat to translate the seat and reconfigure the float valve. The activating device may subsequently be reconfigured to provide fluid bypass, for example the activating device may be released from the seat and translated to a catcher.

The flow restriction may subsequently be reconfigured from the operative configuration to an inoperative configuration, for example the flow restriction may be reconfigured from an extended configuration to a retracted configuration.

The flow restriction may comprise a valve member, for example a flapper or disc.

In the inoperative or retracted configuration the flapper may extend along an axis parallel to a longitudinal axis of the tubular body.

In the operative or extended configuration the flapper may lie perpendicular to the longitudinal axis of the tubular body.

The flapper may rotate from a first retracted position, to an extended position, and then to a second retracted position. The flapper may pivot downwards between the first retracted position and the extended position, and then pivot further downwards between the extended position and the second retracted position. The float valve retainer may take any appropriate form and may include a member for holding a float valve member off a valve seat and preventing the valve from closing.

The float valve retainer may comprise a retainer member for extending axially of the body, and/or the retainer member may extend along the tubular body bore. The retainer member may be tubular. The retainer member may cooperate with the flow restriction such that a pressure differential across the flow restriction generates a release force on the retainer member. In one example, the extended flow restriction engages an upper end of the retainer member, and the extended flow restriction may close off the upper end of a tubular retainer member. The retainer member may be releasably retained in a first position and may be movable from the first position to allow the float valve to close. The retainer member may be releasably retained by releasable retainers, such as shear couplings.

The apparatus may further comprise a catcher for receiving the released retainer member.

The float valve retainer may comprise a retaining member for maintaining the float valve in an inoperable configuration, the float valve being operatively associated with a chamber containing compressible fluid. The fluid contained in the chamber may be at a relatively low pressure compared to well bore pressure. The fluid contained in the chamber may be at atmospheric pressure. The fluid may be gas. The fluid may be liquid.

The selected absolute pressure may be a pressure differential sufficient to release and translate the retaining member and compress the compressible fluid contained in the chamber.

Other arrangements for retaining a float valve open or inoperative are described in WO 2013/079926 and WO 2014/140553 and may be adapted for use in combination with the present disclosure.

The float valve retainer may comprise an apparatus for activating a downhole tool as described below.

### BRIEF DESCRIPTION OF THE DRAWINGS

These and other aspects of the disclosure will now be described, by way of example only, with reference to the accompanying drawings, in which:
Figures 1a to 1d are schematics illustrations of an offshore well, showing steps in accordance with an example of the disclosure;
Figure 2 is a sectional view of a float valve of an embodiment of the disclosure, the float valve being illustrated in an open configuration;
Figure 3 is an enlarged sectional view of area 3 of Figure 2, illustrating a float valve retainer with a flow restriction in a retracted configuration;
Figure 4 is an enlarged view of area 4 of Figure 3;
Figure 5 is a sectional view corresponding to Figure 3, but illustrating the float valve retainer with the flow restriction in an extended configuration;
Figure 6 illustrates the float valve of Figure 1 with the float valve illustrated in a closed configuration;
Figure 7 is an enlarged sectional view of area 7 of Figure 6;
Figure 8 is a sectional view of a portion of a float valve in accordance with an alternative embodiment of the disclosure;
Figure 9 is a sectional view of portion of a float valve in accordance with a further alternative embodiment of the disclosure;
Figure 10 is an alternative float valve according to an embodiment of the disclosure;
Figure 11 is an enlarged section view of area B of Figure 10, illustrating the hydraulic switch;
Figure 12 is an alternative float valve according to an embodiment of the disclosure;
Figure 13 is a cutting tool;
Figure 14 is an enlarged section view of area C of Figure 13;
Figure 15 is an alternative cutting tool;
Figure 16 is an enlarged view of the activating dart engaged in area D of Figure 15;
Figure 17 is an alternative activating dart;
Figure 18 is a safety mechanism for use with a cutting tool;
Figure 19 is an alternative seat arrangement for use with a cutting tool;
Figure 20 illustrates an activating dart engaged with the seat of Figure 19;
Figure 21 illustrates an alternative cutter arrangement for a cutting tool;
Figure 22 illustrate a cutting apparatus;
Figure 23 illustrates an activating dart engaged in the cutting apparatus of Figure 22;
Figure 24 illustrates the cutting apparatus of Figure 22 severing the outer wall of the body; and
Figure 25 illustrates an alternative cutting apparatus.

### DETAILED DESCRIPTION OF THE DRAWINGS

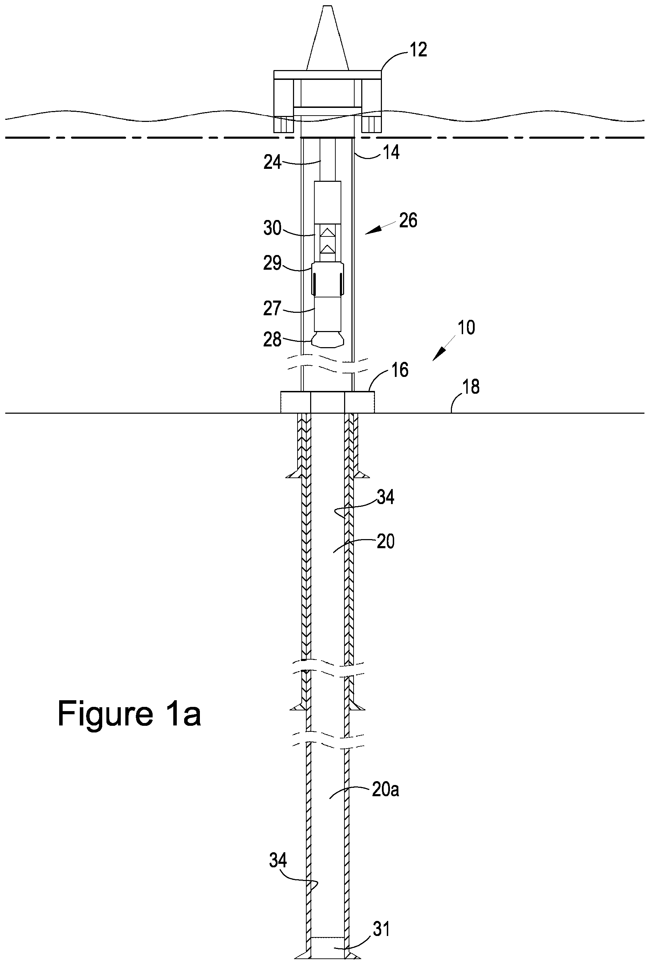

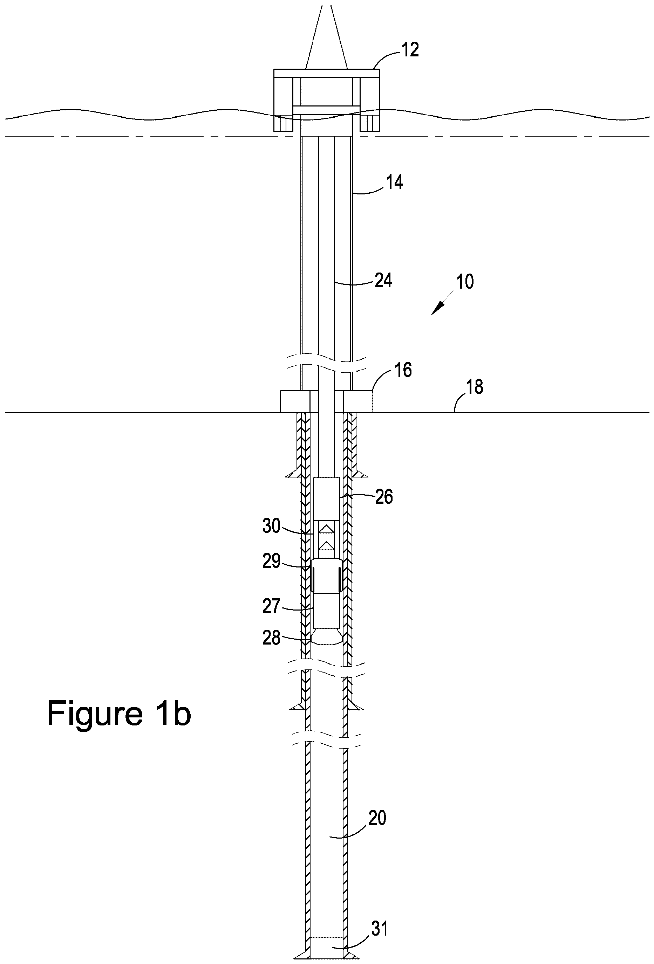

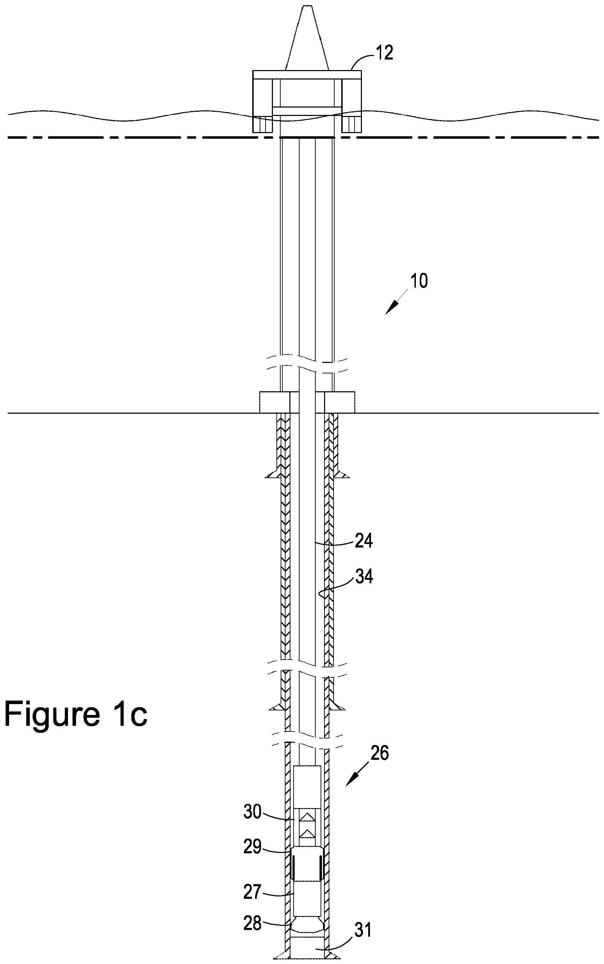

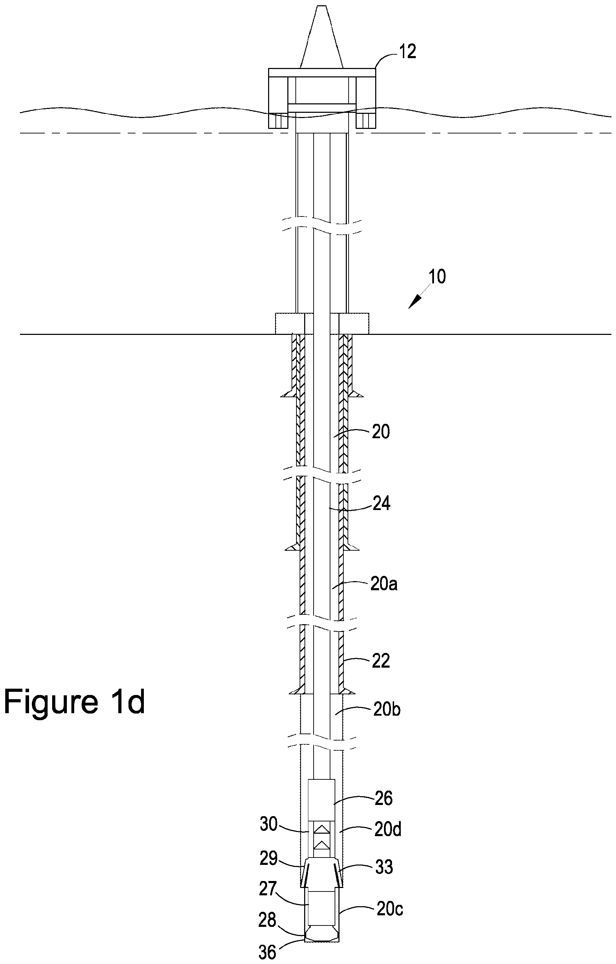

Reference is first made to Figures 1a to 1d of the drawings, which are schematic illustrations of an offshore well 10. Drilling operations are run from the deck of a rig 12 and a riser 14 extends from the rig 12 to a blowout preventer (BOP) 16 on the sea floor 18. A well bore 20 extends through the riser 14 and into the earth below the BOP 16. An upper section of the drilled bore 20a is lined with casing 22. A newly drilled lower section of the bore 20b, as illustrated in Figure 1d, is unlined. Figures 1a, 1b and 1c show a drill string 24 being tripped into the bore 20, and Figure 1d shows the drilling of the bore 20 beyond the end of the last section of casing 22.

The drill string 24 is formed primarily of jointed drill pipe sections. The leading or distal end of the string 24 includes a bottom hole assembly (BHA) 26, and a drill bit 28 is mounted on the distal end of the string 24. The BHA 26 may comprise drill collars and tools and apparatus such as stabilisers, downhole motors, bent subs, measurement-while-drilling and logging-while-drilling (MWD and LWD) tools, bypass tools, under-reamers, jars, rotary steerable systems (RSS) and the like; a typical BHA 26 may be 150 to 215 metres (500 to 700 feet) long. In this example the BHA 26 features at least an MWD/LWD tool 27 and an under-reamer 29. This BHA 26 also includes a check or float valve 30 which, when operational, allows drilling fluid to be pumped down through the string 24 but which prevents fluid from flowing up through the string 24.

As will be described, the float valve 30 is initially provided in an inoperative or held-open configuration, in which fluid may flow both downwards and upwards through the string 24 without activating the valve 30. This is useful as the string 24 may self-fill as the string 24 is made-up and run into the well, as described below.

The bore 20 is filled with fluid and the hydrostatic fluid pressure within the bore 20 is significant. The string 24 is made up from tubular drill pipe sections and if fluid was not permitted to flow into the string 24 (typically through jetting nozzles in the drill bit 28) the hydrostatic pressure in the bore 20 would ultimately damage or collapse the string 24. Accordingly, the string 24 may be top-filled with fluid or, when provided with a float valve 30 as described herein, may "self-fill". However, before drilling commences the float valve 30 is reconfigured to an operative or closed configuration, preventing further upward flow through the string 24, but permitting drilling fluid to be pumped down through the string 24 to exit through the drill bit jetting nozzles and return to surface via the annulus 32 between the string 24 and the bore wall 34.

While the drill string 24 is being run or tripped in it is generally considered desirable to test some of the apparatus in the BHA 26, such as the MWD/LWD tool 27, by pumping fluid down through the string 24, and through the open the float valve 30. This may take place, for example, when the BHA 26 is at a depth of 460 - 610 metres (1500 - 2000) feet below the rig floor, as illustrated in Figure 1a. In deep water operations this test may be carried out, as illustrated in Figure 1a, while the BHA 26 is located within the riser 14. This operation is known as a shallow-hole test and allows the operator to identify any problems with the BHA 26 at an early stage, for example to ensure that the MWD/LWD tool 27 is capable of generating and transmitting pressure pulses. The operator may thus identify if it is necessary to retrieve the BHA 26 to surface before making up more of the drill string 24.

If the shallow-hole test does not identify any problems that require the BHA 26 to be retrieved to surface, the operator continues to make up the drill string 24 such that the BHA 26 is tripped further into the bore 20. As will be described in detail below with reference to the other figures, the float valve 30 includes a hydraulic switch which releases a flow restriction of a float valve retainer when the float valve 30 reaches a predetermined depth in the bore 20 and is exposed to a corresponding hydrostatic pressure, as illustrated in Figure 1b. Once the flow restriction has been released to an extended configuration, a pressure differential may be created across the flow restriction; when it is considered necessary or appropriate, the operator simply activates the rig pumps to initiate downwards flow through the string 24, to release the retainer and allow the float valve to close. However, the operator will likely choose not to close the valve 30 at this point in the bore 20; the released flow restriction does not respond to upwards flow, as will be created by fluid flowing into the string 24 through the jetting nozzles in the drill bit 28. Thus, the operator may continue to make up the drill string 24 and trip the BHA 26 deeper into the bore 20, while the string 24 is allowed to continue to self-fill through the open float valve 30.

When the BHA 26 reaches a depth where the operator considers it appropriate to close the float valve 30, for example 1000 feet or less from the end of the existing bore 20, as illustrated in Figure 1c, the operator activates the drilling fluid pumps on the rig 12 to flow fluid down through the string 24. The flow through the string 24 creates a pressure differential across the flow restriction and reconfigures the float valve retainer. The float valve 30 may then move to the closed or operative configuration.

With the float valve 30 in the closed configuration a float valve member is normally closed, that is biased to a closed position, and prevents fluid from flowing up through the string 24. However, normal fluid circulation, that is fluid flowing down through the drill string 24 towards the drill bit 28, pushes the valve member open. Also, in the example described herein, a device or tool dropped or pumped down through the valve 30 may also push the valve member open and pass through the valve 30. Thus, depending on the location of the valve 30 in the string 24, the operator may use balls or darts to actuate tools or devices in the BHA 26 below the closed valve 30; for example, a ball may be dropped from surface and pass through the string 24 and the closed valve 30 to activate the under-reamer 29.

As the operation of the float valve 30 is independent of the deployment of activation devices there is additional flexibility in the location and operation of the valve 30. For example, the valve 30 may be located below tools or devices which would obstruct the passage of an activation device into the valve 30.

In the example described herein the reconfiguring of the float valve retainer may be identified by the operator. Furthermore, the string 24 will no longer self-fill as the string is tripped into the end of the bore 20 once the valve 30 has closed. If the string 24 continues to self-fill the valve 30 has not closed and further action will be required.

The operator may then continue to trip the string 24 into the bore 20 until the drill bit 28 is at the distal end of the bore 20, where drilling may commence. Figures 1a to 1d illustrate a bore 20 in which the most recently run section of casing 22 has been cemented, leaving a cement shoe track 31 at the distal end of the bore. The cement shoe track 31 may comprise a cylinder of set cement which is 80 to 160 feet long and which must be removed by the drill bit 28. The drill string 24 is rotated which in turn rotates the drill bit 28, or the BHA may include a downhole motor. Simultaneously, drilling fluid is pumped from the rig 12, down through the string 24, through the float valve 30, and out of the jetting nozzles in the bit 28. The drilling fluid cools the bit 28 and carries drill cuttings away from the cutting face 36. In addition, the density or weight of the drilling fluid is carefully controlled and monitored to assist the operator in providing well control and in controlling and protecting the rock formation that will be exposed by the drilling operation. The weight of the drilling fluid may be varied and controlled by the operator throughout the operation, for example depending on whether the bore 20 is wholly lined or includes an unlined section, and the weight of the drilling fluid may be changed by the operator before drilling commences.

Initially, only the drill bit 28 is utilised to drill through the cement shoe track 31 and advance the bore beyond the end of the casing 22, until the under-reamer 29 is located beyond the end of the casing 22. At that point a ball may be dropped through the string 24, and through the closed valve 30, to land in and activate the under-reamer 29, such that the under-reamer cutters 33 may be extended. Thus, as illustrated in Figure 1d, beyond the end of the casing 22 the drill bit 28 cuts a pilot bore 20c which is radially enlarged by the under-reamer 29 to provide a bore 20d having a diameter larger than the internal diameter of the casing 22.

This sequence of operations would not be possible with a float valve which relied on activation by dropping or pumping a ball or dart into the valve, as the presence of the ball or dart in the valve would prevent the subsequent activation of the under-reamer 29. Thus, it would have been necessary to drill with the float valve open until the under-reamer was activated and only then drop or pump an activating device into the valve. This would involve drilling in open hole without an operating float valve.

If at any point there is a tendency for fluid to flow up the inside of the drill string 24, this is prevented by the float valve 30; in the embodiment described below the activated float valve 30 is normally-closed, and there is no opportunity for fluid to flow up the inside of the string 24.

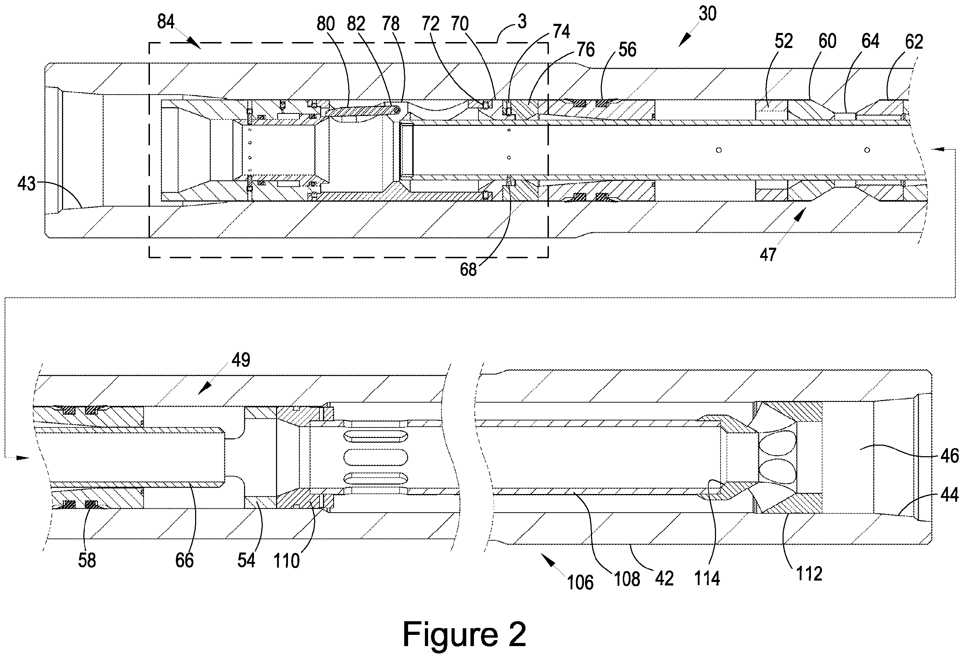

The float valve 30 and its operation will now be described in detail with reference to Figures 2 through 7 of the drawings. In accordance with convention the Figures show the valve 30 in a horizontal orientation, with the left-hand side of the Figures representing the upper end of the valve 30 and the right hand side of the Figures representing the lower end of the valve.

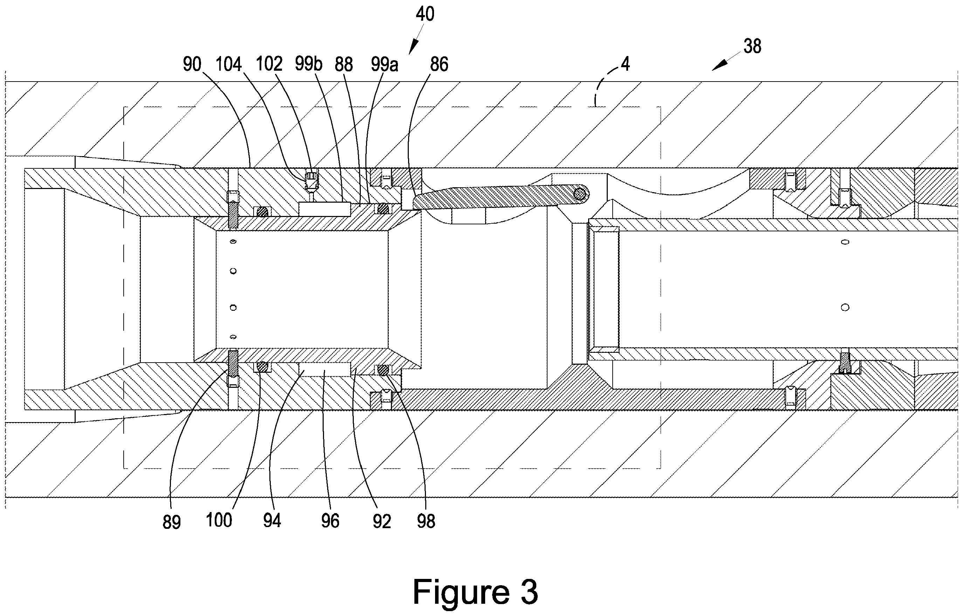

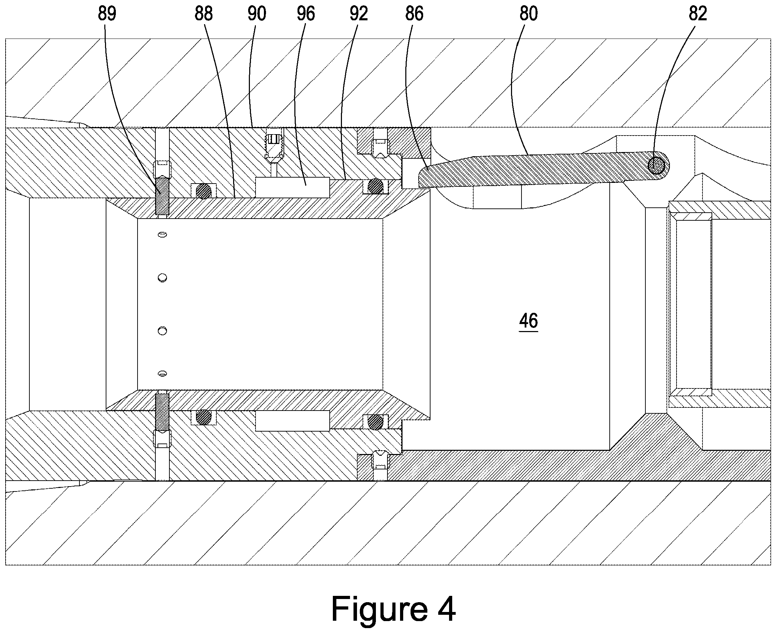

Reference is first made to Figure 2 of the drawings, a sectional view of a float valve 30 of an embodiment of the disclosure, the float valve 30 being illustrated in an initial inoperative or held-open configuration. Reference is also made to Figure 3 of the drawings, an enlarged sectional view of area 3 of Figure 2, illustrating a float valve retainer 38 forming part of a float valve actuator 40 in a first inactive or retracted configuration. Figure 4 of the drawings is an enlarged view of area 4 of Figure 3.

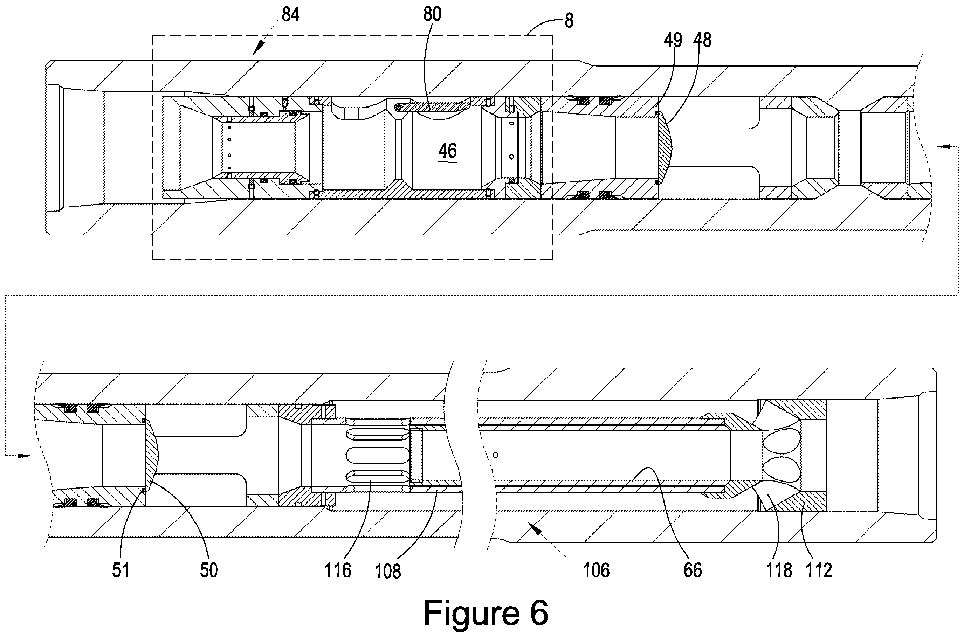

The float valve 30 comprises an elongate tubular body 42 adapted for incorporation in a drill string 24, typically in or adjacent the BHA 26, and in the embodiment described herein within the BHA 26 and above the MWD/LWD tool 27 and the under-reamer 29. In other examples the valve could be provided at the distal end of the BHA 26, directly adjacent the drill bit 28, or in the drill string 24 above the BHA 26. The body 42 includes female or box end connections 43, 44 for coupling with adjacent drill string elements. A generally cylindrical bore 46 extends through the body 42 and accommodates the primary operating elements of the valve 30. The illustrated valve 30 includes two float cartridges 47, 49, each comprising a respective float valve member or float flapper 48, 50 (Figure 6). The float cartridges 47, 49 are provided in a central portion of the bore 46. The pivoting flapper valve members 48, 50 are mounted in respective partially cut-away sleeves 52, 54, each sleeve 52, 54 carrying external seals 56, 58 to provide sealing engagement with the inner wall of the bore 46. When assembling the valve 30, the float cartridges 47, 49 are inserted into the opposite ends of the body 42 and engage respective spacers 60, 62 on either end of a bore restriction 64.

In the initial valve configuration of Figures 2, 3 and 4 the float flappers 48, 50 are held open by a retainer member in the form of a tube 66. The tube 66 is initially fixed in position by shear pins 68 which extend through a collar 70, the collar 70 being fixed by grub screws 72, 74 to a spacer 76 which abuts the upper end of the sleeve 52 and a sleeve 78 which provides a mounting for a flow restriction in the form of tube-releasing pivoting flapper 80. The upper end of the tube 66 extends part-way through the sleeve 78 and initially lies in a plane directly below the flapper pivot pin 82.

The tube-releasing flapper 80 is initially inoperative and is retained in an open or retracted position by a retainer in the form of a hydraulic switch 84. In particular, a flapper edge portion 86 is restrained by an end of a movable sleeve 88, mounted within a tubular switch body 90. The sleeve 88 is illustrated fixed in position relative to the body 90 by shear pins 89. The sleeve 88 has an external shoulder 92 which may travel within a body recess 94; in the initial configuration as illustrated in Figures 2, 3 and 4, axially and laterally extending surfaces of the sleeve 88 and body 90 collectively define an annular chamber 96. The chamber 96 is isolated from the valve body bore by a seal 98 mounted in a slot in the shoulder 92 which engages a wall of the recess 94 and a seal 100 mounted in a slot in the inner wall of the body 90 which engages an outer wall of the sleeve 88. It will be noted that the wall of the recess 94 is stepped, with the seal 98 initially engaging a smaller diameter wall portion 99a. If the sleeve 88 moves upwards relative to the body 90 and the seal 98 is located within the larger diameter wall portion 99b, sealing contact is lost; this is intended to prevent pressurised fluid from becoming trapped in the chamber 96 which might otherwise result in pressure locking of the sleeve 88 and body 90, and limits the risk of galling between of the contacting surfaces if the sleeve 88 is moved very quickly relative to the body 90.

To facilitate assembly, a plug 102 located in a bleed hole 104 in the body 90 may be removed to permit fluid to flow into and out of the chamber 96; after the sleeve 88 and body 90 are assembled and fixed relative to one another by the shear pins 89 the plug 102 is fixed and sealed in the bleed hole 104. In this example the plug 102 comprises a copper wedge with provides the sealing function and a non-sealing grub screw which holds the wedge in the hole 104. In the illustrated embodiment the chamber 96 will initially contain air at atmospheric pressure, though if desired the chamber 96 may be part filled with a liquid such as hydraulic oil.

The lower end of the float valve body 42 accommodates a catcher assembly 106 for receiving and retaining the released retainer tube 66. The catcher assembly 106 itself comprises a tube 108 dimensioned to receive the tube 66, the catcher tube 108 being centrally mounted in the body bore by end collars 110, 112. The lower collar 112 includes a locating face 114 for engaging the end of the released tube 66.

The float valve 30 is assembled and incorporated in the string 26 as described above and run into the fluid-filled bore 20. The open float valve 30 permits fluid to flow from the bore 20 into and up through the string 24 as the string is made up and lowered into the bore 20. At a certain depth, for example 1500 feet below the rig floor, as illustrated in Figure 1a, the operator pumps drilling fluid down through the string 24 to test the tools and devices in the BHA 26 which are flow-operated, or which otherwise rely on flow to function. For example, the test may be used to ensure that the MWD/LWD tool 29 generates and transmits appropriate pressure pulse signals. Assuming that the test is completed without any problems being identified, the operator then continues to make up the string 24.

As the valve 30 is lowered deeper into the bore 20 the hydrostatic pressure experienced by the valve 30 increases. As the sealed chamber 96 defined between the sleeve 88 and the body 90 contains air at atmospheric pressure, the higher pressure in the bore 20 generates a pressure force across the shoulder 92, which force is resisted by the shear pins 89. Accordingly, by selection of an appropriate number and rating of shear pins 89, the operator may select when the hydrostatic pressure force is sufficient to shear the pins 89 and translate the sleeve 88 upwards. The lower end of the sleeve 88 thus disengages from the edge of the flapper 86, and the flapper 80 is free to rotate. The sleeve 88 has thus served as a detent for the flapper 80.

It will be noted that the release of the flapper 80 is achieved without the requirement to drop or pump an activating device such as a ball or dart into the string 24. Thus, there is no need to break the string 24 at surface to insert an activating device or wait while the activating device travels down through the string 24. This activation method also allows the valve 30 to be positioned in the BHA below tools or devices which would prevent the passage of a ball or dart, or for the valve 30 to be positioned above tools which require subsequent activation by ball or dart, such as the ball-activated under-reamer 29.

In this example the shear pins 89 may be selected to release the sleeve 88 when the fluid pressure in the bore 20 reaches a level of, for example, 3.5 × 10⁴ kPa (5000 psi). This pressure may result solely from hydrostatic pressure or from a combination of hydrostatic pressure and pump pressure. Thus, for the shallow hole-test as illustrated in Figure 1a, the hydrostatic pressure may be 1 × 10⁴ kPa (1500 psi) and the operation of the rig pumps may add an additional 1 × 10⁴ kPa (1500 psi), to provide an absolute pressure of 1 × 10⁴ kPa (3000 psi). Thus, the shear pins 89, rated at 3.5 × 10⁴ kPa (5000 psi), retain the sleeve 88 in position and the valve 30 remains in the open or inoperative configuration as the MWD/LWD tool 27 is tested. Only when the valve 30 reaches a depth in the bore 20 where the hydrostatic pressure is 3.5 × 10⁴ kPa (5000 psi), as illustrated in Figure 1b, do the pins 89 shear.

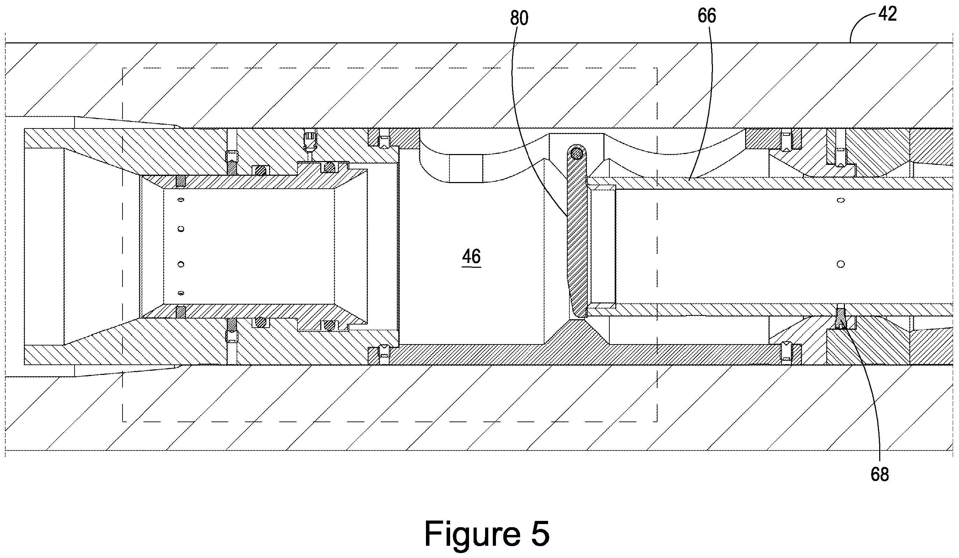

The flapper mounting pin 82 is sprung (spring not shown) and arranged to urge the flapper 80 to rotate from an initial position in which the flapper 80 extends upwards and parallel to the main valve/string axis, to a position in which the flapper 80 extends into the valve bore 46. Thus, on release, the flapper 80 is rotated through perhaps 45 degrees into the valve bore 46 by the mounting pin spring and will be further rotated under the influence of gravity until the flapper 80 lands on the upper end of the retainer tube 66, as illustrated in Figure 5 of the drawings. With the flapper 80 in this configuration the string 24 may continue to self-fill. As the string 24 is further made up and run into the bore 20, fluid may flow into the string 24 from the bore 20 and lift the flapper 80 off the end of the tube 66.

Once the string 24 has been run in sufficiently to locate the drill bit 28 at or close to the end of the bore 20, as illustrated in Figure 1c, the operator may activate the float valve 30 by pumping fluid down through the string 24. Flow of fluid through the valve 30 pushes the released flapper 80 downwards against the upper end of the retainer tube 66. In this position, the flapper 80 creates a flow restriction in the tool bore and closes-off the upper end of the tube 66. This creates a pressure differential across the extended flapper 80, resulting in an axial force being applied by the flapper 80 to the tube 66. This force may be significant and is sufficient to shear the pins 68 retaining the tube 66. The flapper pivot pin 82 is provided "loose" to ensure that the flapper 80 will sit square on the end of the tube 66. Once the tube-retaining pins 68 have sheared, flow will continue to push the flapper 80 and tube 66 downwards and the tube 66 will be pushed through the body 42 and into the catcher assembly 106. The release of the tube 66 is evident to the operator on surface as a sudden drop in pressure

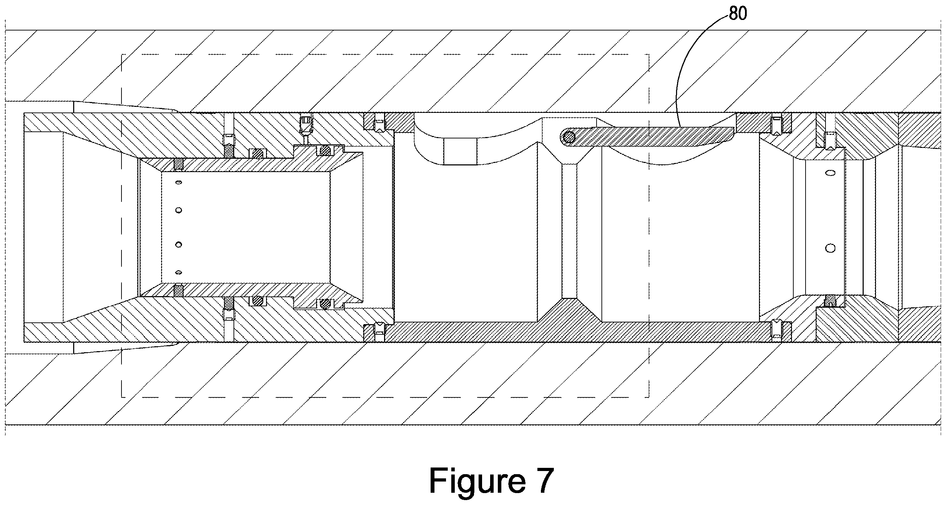

With the tube 66 pushed from the upper part of the body 42, the flapper 80 is now free to rotate further to the second retracted position, parallel to the body axis and to the side of the body bore 46, as illustrated in Figures 6 and 7 of the drawings.

The float flappers 48, 50 are now free to rotate and close the body bore 46, as illustrated in Figure 6. It is still possible to pump fluid down through the string 24 as the flow simply pushes the flappers 48, 50 open. However, flow of fluid up the string 24 is prevented, as any upward flow will simply urge the normally-closed float flappers 48, 50 into tighter contact with the associated seats 49, 51. Thus, the string 24 is protected against inflow from the well bore 20.

As evident from the above description, the float flappers 48, 50 may remain held open and inoperative until the operator chooses to activate the valve 30. As noted above, the hydraulic switch 84 operates to free the flapper 80 at a preselected hydrostatic pressure and at any appropriate point after this the operator may activate the rig pumps to create a pressure differential across the flapper 80 and push the tube 66 past the float flappers 48, 50.

Of course, an operator may choose to release the flapper 80 and immediately activate the valve 30. This could be achieved, for example, by waiting until the valve 30 had been tripped into a depth in the bore 20 where the hydrostatic pressure was 2.8 × 10⁴ kPa (4000 psi). If the rig pumps were then activated to provide an additional 1 × 10⁴ kPa (1500 psi) of pressure the absolute fluid pressure within the string 24 at the valve 30 would be 3.8 × 10⁴ kPa (5500 psi). This would shear the 3.5 × 10⁴ kPa (5000 psi) rated pins 89 and cause the sleeve 88 to move upwards as the volume of the chamber 96 rapidly decreased. The flapper 80 would then be pushed into the valve bore 36 and the fluid being pumped through the valve 30 would immediately move the flapper 80 to engage the upper end of the tube 66, and then push the tube 66 past the float flappers 48, 50.

An operator may also choose to activate the valve 30 only when drilling commences, and thus have the string 24 capable of self-filling over the duration of the tripping operation. This would be achieved by selecting shear pins 89 with a rating that is higher than the hydrostatic pressure experienced during tripping in. For example, the pins 89 may have a rating that is 0.7 × 10⁴ kPa (1000 psi) higher than the hydrostatic pressure at the distal end of the bore 20. Thus, the pins 89 will only shear when the operator activates the rig pumps just prior to commencing drilling. The flapper 80 will then be released and immediately displace the tube 66, such that the valve 30 is operative.

As noted above, there is no requirement to drop or pump an activating ball or dart to activate the valve 30 and thus the valve bore may remain clear of obstructions. Thus, ball or dart-activated tools and devices, such as under-reamers, may be positioned below the valve 30 and activated after the valve. The ability to activate the valve 30 without the requirement to drop or pump an activating device into the valve 30 also provides for additional flexibility in the location of the valve 30 in a string; the valve 30 may be located below tools or devices that prevent passage of activating balls or darts.

If for any reason the hydraulic switch 84 does not release the flapper 80, or it is desired to release the flapper 80 before the release pressure can be attained, the upper end of the tube 66 is provided with a seat 106 to allow a ball, dart or the like to be pumped down the string 24 and close off the upper end of the tube 66. A pressure differential may thus be developed across dropped ball to shear the pins 68 and move the tube 66 downwards, allowing the float flappers 48, 50 to close, in a manner similar to the valves described in WO 2013/079926 and WO 2014/140553. Even though the upper end of the tube 66 is closed, bypass passages 116, 118 in the catcher tube 108 and in the lower end collar 112 will allow fluid to flow down through the float valve bore 46.

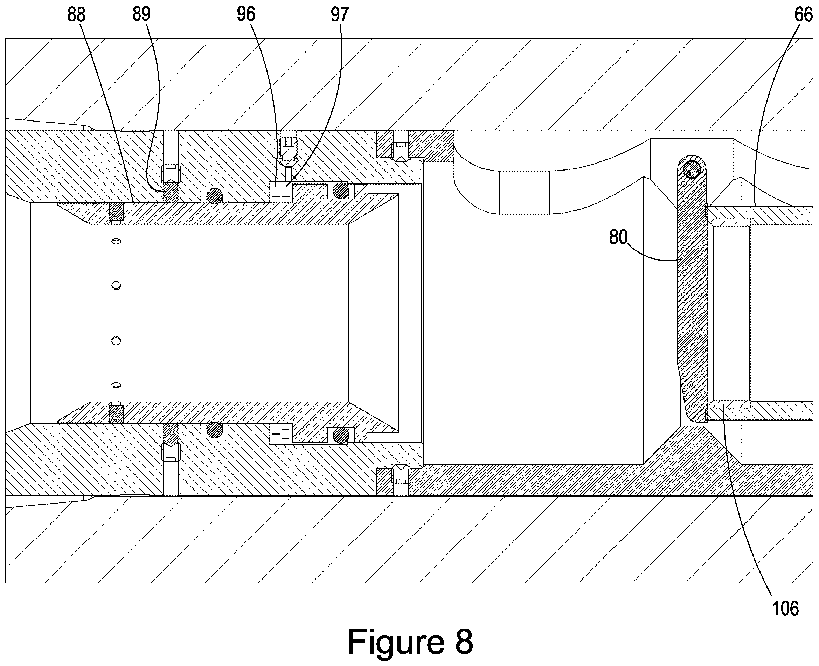

Reference is now made to Figure 8, a sectional view of a portion of a float valve in accordance with an alternative embodiment of the disclosure. The valve 30 is identical to the valve 30 described above, however the chamber 96 contains a volume of liquid, in the form of oil 97, in addition to air at atmospheric pressure. Thus, when the valve 30 is exposed to a pressure of 3.5 × 10⁴ kPa (5000 psi) or above, the pins 89 will shear and the air in the chamber 96 will be compressed very rapidly as the sleeve 88 moves to reduce the volume of the chamber 96. However, the oil 97 is substantially incompressible and movement of the sleeve 88 is thus halted before the opposing sleeve and body surfaces meet. In the absence of the oil 97 the sleeve 88 may be travelling at a very high velocity when the surfaces meet and there may be a significant shock loading on the parts with an associated risk of damage. The sleeve 88 may still be travelling at a high velocity when the oil 97 and air in the chamber 96 are fully compressed; however, any shock loading is transmitted via the oil 97 and is spread over a significantly greater area.

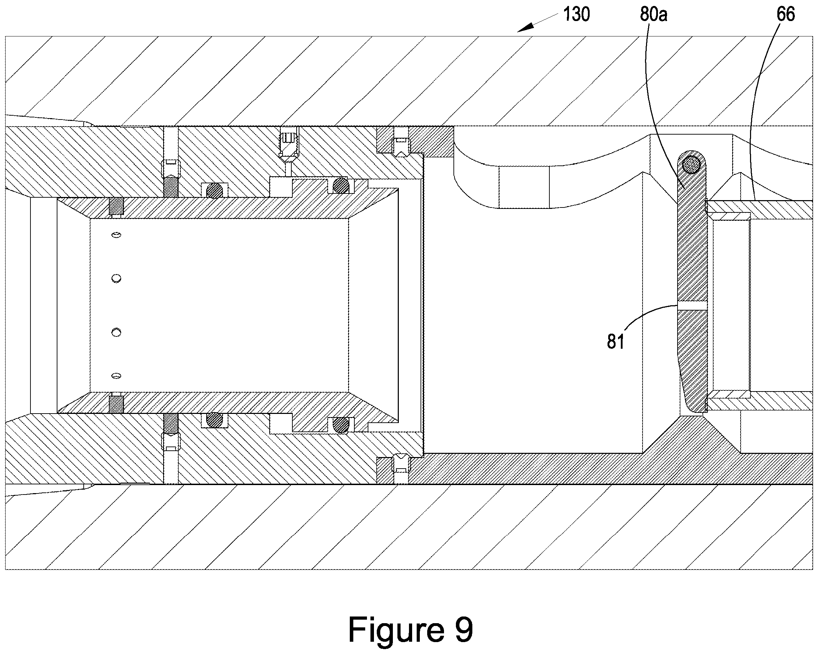

Reference is now made to Figure 9, a sectional view of a portion of a float valve 130 in accordance with an alternative example of the disclosure. In this embodiment the tube-releasing flapper 80a is provided with a small through bore 81 which prevents the flapper 80a from plugging the string bore in the event that the tube 66 is not displaced.

It will be apparent to the skilled person that the above-described examples are merely exemplary of the disclosure and that various modifications and improvements may be made thereto. For example, poppet floats could be utilised rather than flapper or disc valves in conjunction with an alternative arrangement to maintain the floats open. Also, the above description is primarily directed to the provision of float or check valves for use in drilling operations. However, similar float valves may also be usefully employed in other tubing strings, such as casing or liner floats, and the present disclosure is equally applicable to such floats.

Multiple float valves may be provided in string, and different locations in the string.

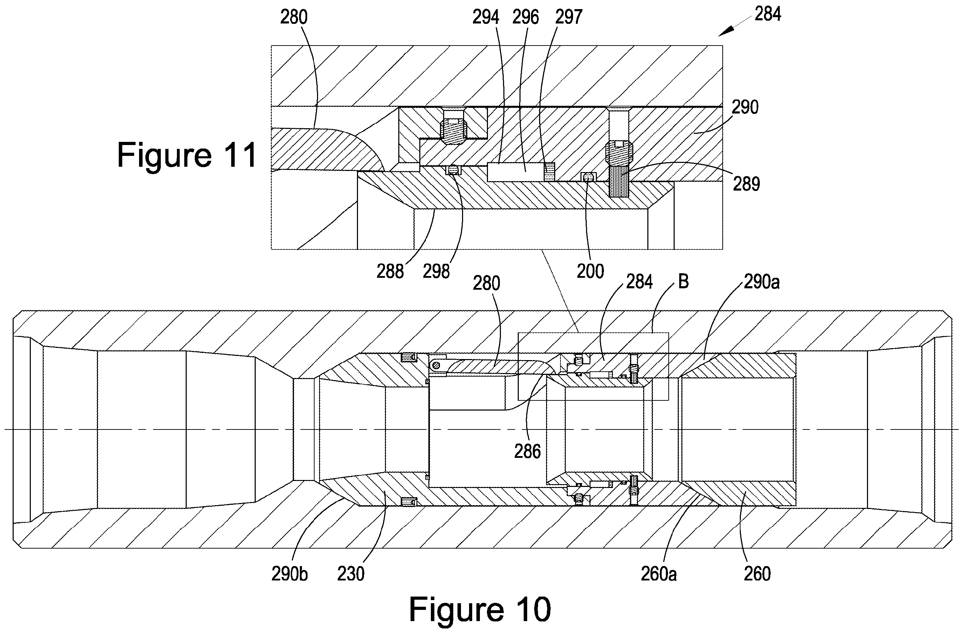

An alternative float valve 230 according to another embodiment is shown in Figures 10 and 11. Housing body 210 has an upper box 220 and lower box 240. The lower box 240 could include the pin of a drill bit such that the float valve 230 is located below all the MWD equipment. Alternatively, the housing body 210 may comprise a pin-pin sub on the bottom such that the valve 230 comprises a box at the top and a pin at the bottom.

The valve 230 comprises a hydraulic switch 284 which operates in a similar manner to the hydraulic switch 84 in valves 30, 130 described above. In this embodiment, the hydraulic switch 284 is located below a non-return flapper 280 and a tapered sleeve 288 holds the flapper 280 open. Therefore, the hydraulic switch 284 operates directly on the flapper 280 of the float valve 230. The sleeve 288 therefore acts as a float valve retainer in this configuration.

The hydraulic switch 284 comprises valve body 290 having a body recess 294. Sleeve 288 has an external shoulder 292 which can travel within the body recess 294. In an initial position, as shown in Figure 11, annular chamber 296 is defined between the laterally and axially extending surfaces of the sleeve 288 and body 290 with the sleeve 288 fixed in an initial position by shear pins 289. The sleeve 288 will translate within the body recess 294 closing the chamber 296 when the shear pins 289 are sheared. Annular chamber 296 is slightly more compact that the previous embodiment and further comprises a damping member in the form of a sacrificial gasket 297. Gasket 297 may be formed from a hard rubber, plastic or a soft metal and will absorb the impact energy generated as the chamber 296 is closed. The use of a gasket can be more convenient than using liquid or oil and may be utilised with the switch 84 previously described.

A bleed hole (not shown) associated the chamber 296 is provided to allow for assembly of the float valve 230. Seals 200 and 298 are similarly arranged to seals 98, 100 of hydraulic switch 84. In use, valve 230 will activate when the absolute pressure reaches the predetermined set pressure. This pressure can be set by selection of an appropriate number and rating of shear pins 289 such that when the absolute pressure reaches the set value, the shear pin will shear, allowing the sleeve 288 to move downwards and release the flapper 280. For example, in use in a horizontal well, the pressure could be selected to be slightly more than the hydrostatic pressure meaning that in order for the pins 289 to shear, an increased absolute pressure is required. This can be achieved by, for example, pumping at surface and can allow the float valve 230 to be activated, for example prior to commencing drilling operations.

The valve body 290 and a spacer 260 are incorporated into housing body 210 and comprise tapered ends 290a, 290b and 260a, respectively. This arrangement ensures that it is virtually impossible to place the valve incorrectly. Placement of the valve in the wrong way would have extreme consequences.

Unlike float valves 30, 130, the float valve 230 does not provide an indication at surface when the valve 230 is activated. However, float valve 230 is simpler and therefore, more cost effective. Furthermore, there is no inner pipe allowing the float bore 266 can be larger. Since valve 230 is activated using absolute pressure, the valve will work equally well at any downhole angle. In addition, having the hydraulic switch is directly connected to the flapper can improve reliability of the float valve 230. This does however, mean that unlike float valves 30, 130, the float valve 230 will activate immediately upon exposure to the pre-set pressure in comparison to valves 30, 130 which require exposure to a pre-determined hydrostatic pressure and a pressure differential to be generated across the flapper to push retainer tube 66 past the flapper floats.

It is envisaged that additional float valves may be included in the housing 210 by, for example, providing an extended housing. Each of the float valves will have their own hydraulic switch thus building redundancy into the tool. It is also possible that each valve could be designed to activate at different absolute pressures such that the location and/or timing of activation of each valve can be selected. Utilising multiple independent float valves in a single tool may also offset for the fact that float valve 230 does not provide any indication at surface that the valve has activated. An operator may also determine that a float valve 230 is working by looking at the fluid displaced by the pipe.

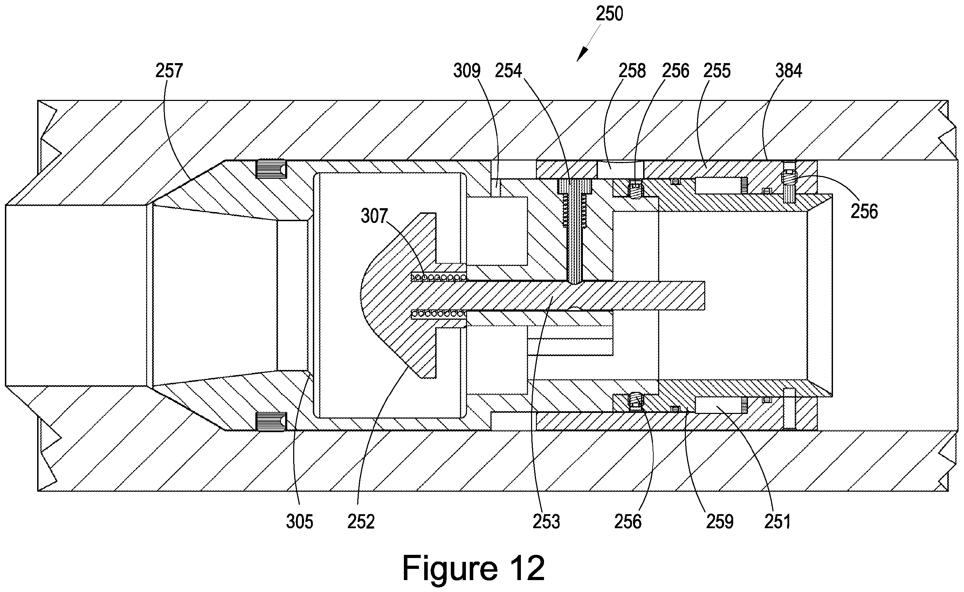

An alternative float valve 250 is illustrated in Figure 12. In this instance, the float valve is a poppet/plunger/NRV type valve 252. Three arms hold the central opening for the shaft 253 of the poppet 252, one of which has a spring-loaded retaining pin 254 within in. Hydraulic switch 384 is positioned below the poppet 252 and is similar to hydraulic switches 84, 284. Shear pins 256 retain the inner sleeve 259 and outer sleeve 255 of the switch 384 and an annular chamber 251 is formed between the sleeves. As shown in Figure 12, one shear pin is missing as a way of pre-selecting the pressure at which the remaining pins will shear.

Once the selected absolute pressure is reached, pins 256 will shear and the outer sleeve 255 is moved upwards (to the left in Figure 12) as chamber 251 closes. Opening 258 then aligns with retaining pin 254 such that the pin 254 moves radially outwards and releases the shaft 253 of the poppet 252. The poppet 252 is then released and will move into engagement with a seat 305 formed on the body under the action of spring 307, preventing upwards flow through the valve 250. As such, the sleeve 255 acts a float valve retainer in this arrangement.

A small vent hole is 309 provided in the upper housing to prevent pressure locking as the sleeve 255 moves upwards. The valve 250 is also provided with a tapered nose 257 to prevent the valve being placed in the wrong way.

In some circumstances, a poppet valve is considered to be more reliable than a flapper type valve, however such valves do not allow for through-bore access.

Those of skill in the art will also recognise that the hydraulic switch 84 may have utility in other applications. For example, the illustrated switch is utilised as a detent, for holding the tube-release flapper 80 in a retracted position. Of course, the switch could be utilised for releasably retaining another member or part. For use as a detent the switch is only required to provide a limited degree of travel, however by providing a longer chamber 96 it is possible to provide a greater degree of travel.

The pressure differential between the atmospheric chamber 96 and the hydrostatic pressure in a deep bore may potentially create a very significant pressure force. In one illustrated example the switch is operated at relatively shallow depth, however in other applications the switch could be configured to be released only in response to significantly higher pressures. The resulting pressure differentials may be utilised to create a significant force or may be utilised to accelerate a mass and then utilise the kinetic energy or momentum of the moving mass.

The significant pressure forces which may be generated also require care to be taken to retain the parts of the switch in the initial relative position, to avoid an accidental or premature release. Thus, multiple release mechanisms may be provided.

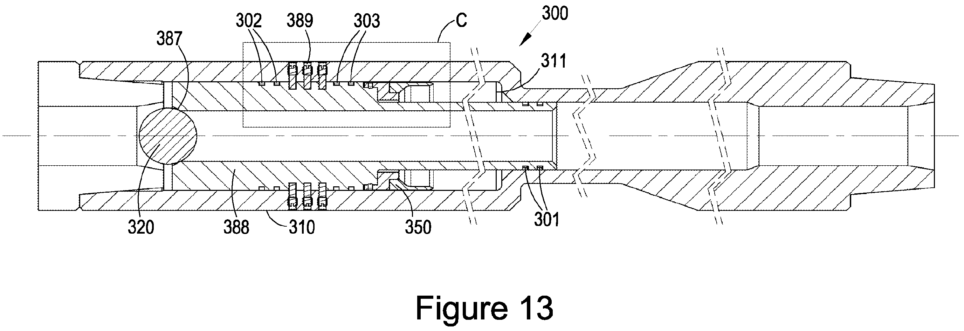

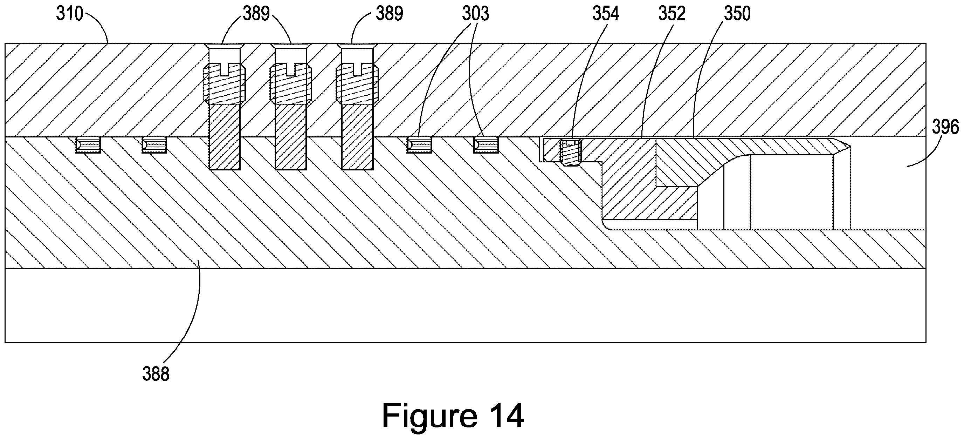

A cutting tool 300 which utilises the force generated as mentioned above is shown in Figure 13 and 14. In the conventional manner the tool 300 is illustrated such that the box to the left hand-side of Figure 13 is the top of the tool such that flow from surface will travel left to right. Cutting tool 300 is run in the hole and will remain dormant until ball 320 is dropped downhole to initiate the severance sequence.

Similarly to previous examples, an annular chamber 396 is formed between the tool body 310 and a sliding sleeve 388. During assembly at surface a volume of air at atmospheric pressure will be trapped in annular chamber 396. This volume of air is utilised to provide power to sever the tool 300. As the tool 300 is run in hole, the hydrostatic pressure both in and around the tool will increase but air within chamber 396 is maintained at atmospheric pressure by the presences of seals 301 and 302 positioned at either end of sleeve 388. Inside annular chamber 396, a hard ceramic or tungsten circular knife 350 is glued to a metal retainer 352, which is in turn retained by a grub screw 354 to the sliding sleeve 388.

Two set of seals 301 and 302 are present and are in contact with the inside surface of body 310 at different diameters. As such, the left hand-side of sliding sleeve 388 will experience hydrostatic pressure on the outside while the inside of the sleeve experiences effectively nothing. The resulting difference in pressure is multiplied across the annular cross-section of the tool and will generate a significant pressure force on the sleeve 388 from the left to the right of the sleeve, relative to the body 310, For example, in a 12.7 × 7.6cm (5" × 3") tool the annular cross-section is 100 cm² (12.5 sq.-in) meaning a pressure difference of 3.5 × 10⁴ kPa (5000 psi) would create 62,500 Ib-force (28.4 metric tonnes). It is not unusual for the hydrostatic pressure in some wells to reach more than 17.2 × 10⁴ kPa (25,000 psi) on occasion and therefore, there is a large source of force to be utilised. Smaller tools would have smaller annular cross-sectional areas and hence smaller forces will be generated, smaller sleeves would be used, and the amount of energy produced will be smaller. However, smaller tools will be proportionally easier to cut.

The sleeve 388 is retained in the position as shown in Figures 13 and 14 by a series of shear pins 389. The shear pins 389 are spaced both axially and radially to provide a sufficient retaining forces to prevent the sleeve 388 from moving. The shear pins are selected to be stronger than the expected hydrostatic pressure in the well, which is generally predictable. A pair of seals 303 is also in place to seal the shear pins from internal to external pressure.

If, for any reason, severance was required, ball 320 is dropped from surface. The ball 320 will be sized to sit on the seat 387 of annular sleeve 388, occluding the sleeve 388. The operator would then apply pressure above the ball by pumping. This will increase the force applied to the sleeve 388 causing shear pins 389 to shear. Once sheared, the annular chamber 396 will effectively collapse under hydrostatic pressure as sleeve 388 accelerates very rapidly to the right, as per the constant acceleration formula (F=ma, s = ut+1/2ut² etc). There will be almost no damping provided by the annular chamber 296 on the sleeve 388 as the chamber is closed. As the sleeve 388 moves to the right, circular knife 350 will pierce body 310 at position 311.

Ball 320 will initially assist in accelerating the sleeve as the high-pressure fluid above the ball 320 rapidly expands as sleeve 388 moves to the right in the drawings. However, as the ball moves, the fluid in the well below the ball 320 needs to "accelerate" as well and as result, the fluid in the well below the ball 320 provides a significant damping force on the ball 320 as this fluid is compressed. As noted above, there is very little damping provided on the sleeve 388 meaning sleeve 388 will accelerate faster, lifting the ball 320 from the seat 387 such that at this point the ball 320 will provide no more assistance.

The energy created by the release of the sleeve 388 and subsequent rapid collapse of chamber 396 is proportional to the length of travel of the sleeve. This can be regarded as pure work, i.e. force × distance. Therefore, the longer the distance of travel of the sleeve 388, the faster it will become, and the more energy will be generated for the knife 350 to affect a cut. If the mass of the sleeve is increased, the sleeve will not reach as high speeds, but the sleeve would have more momentum. This could be useful in some operations. The acceleration on the sleeve 388 is likely to be hundreds of times more than gravity, perhaps as much as a thousand G, and an impact speed of 1609.344 km/hour (1000 mph) is possible on, for example a 30 ft (9m) travel, especially in high pressure wells.

The body 310 of cutting tool has been shaped such that circular knife 350 only has to travel a relatively short distance to pierce the body 310 whilst still being significantly strong. However, other geometries are envisaged, a few examples of which are also discussed below.

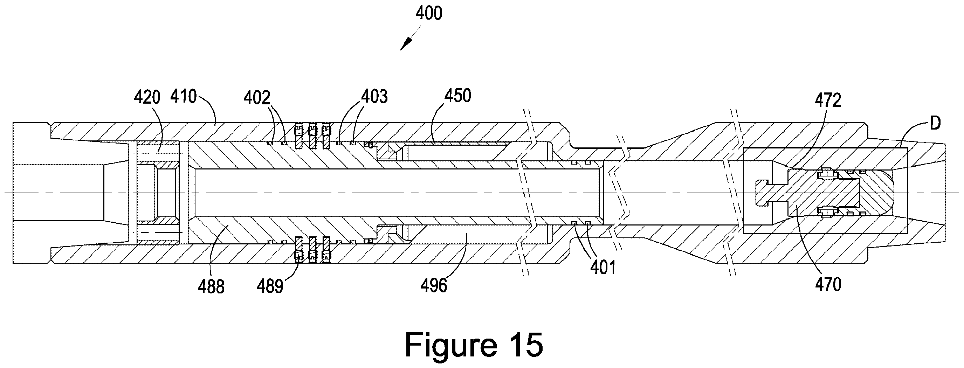

Another cutting tool 400 is illustrated in Figure 15. Similarly, cutting tool 400 utilising the energy generated from the closure of annular chamber 496 to pierce body 410 with circular knife 450. The cutting knife 450 has more elongate shape than knife 350 and as such, the impact force of the knife will be initially concentrated on the nose of the knife 450, piercing on one side of the body 410. If the knife 450 does not pierce entirely through the body 410, the body will be sufficiently weakened to allow an operator to tear the rest of the circumference, if, for example, the tool was stuck or anchored.

Sleeve 488 is retained by shear pins 489 similarly to above. Two set of seals 401 and 402 are present and are in contact with the inside surface of body 410 at different diameters and a pair of seals 403 is also in place to seal the shear pins from internal to external pressure. When severance is required, activating dart 470 is dropped from surface and is translated through the sleeve 488 into seat 472 below. As such, more pressure is required to shear pins 489 since the force is acting on a different area compared to the embodiment of Figures 13 and 14. However, in this arrangement, there will be more cutting energy generated because the absolute pressure in the tool will be the total of hydrostatic energy plus the exerted energy from surface to above the activating dart 470 when the sleeve 488 in in the initial position as shown in Figure 15.

Unlike the previous example, none of the energy generated by the sleeve 488 moving to close chamber 394 will be used to accelerate the rest of the mud/fluid system because the activating dart 470 occludes the tool below the sleeve 488. Thus, none of the energy of the cutting stroke is wasted so to speak. Similarly to above, energy created by release of the sleeve 488 and subsequent rapid closure of chamber 496 is proportional to length of travel of the sleeve 488.

As the sleeve 488 travels and closes chamber 496, there will be a reduction of pressure at surface as the volume of fluid above the activating dart 470 increases. However, if the volume required to compress the contents of the string is more than the volume of chamber 496, this will provide a net gain in terms of energy to the cutting stroke since the tool will require more volume of fluid to be pumped to reach the desired pressure.

For example, if the hydrostatic pressure was 3.5 × 10⁴ kPa (5000 psi) and the extra pressure from pumping fluid from surface was also 3.5 × 10⁴ kPa (5000 psi), and the volume of fluid required to compress the contents of the string to 3.5 × 10⁴ kPa (5000 psi) was double that off annular chamber 496, the pressure at the beginning of the cutting stroke, immediately after pins 489 have sheared would be 7 × 10⁴ kPa (10,000 psi (125,000 lb)) and at the end of the cutting stroke, the pressure would be 5.2 × 10⁴ kPa (7,500 psi (93,750 lb)).

Therefore, the longer the cutting tool, the longer the cutting stroke (the length of travel of the sleeve to cut the body) and the deeper the position of the tool in the well will all provide additional energy to the cutting stroke.

A bypass catcher sleeve 420 is provided above the sleeve 488 to prevent anything inadvertently landing on the sleeve, for example a ball, and blocking sleeve which could result in erroneous activation of the cutting tool to cut the body 410. The provision of a bypass catcher sleeve 420 is one of several safety mechanisms which can be utilised with cutting tools of the present disclosure to protect against erroneous activation of the cutting tool.

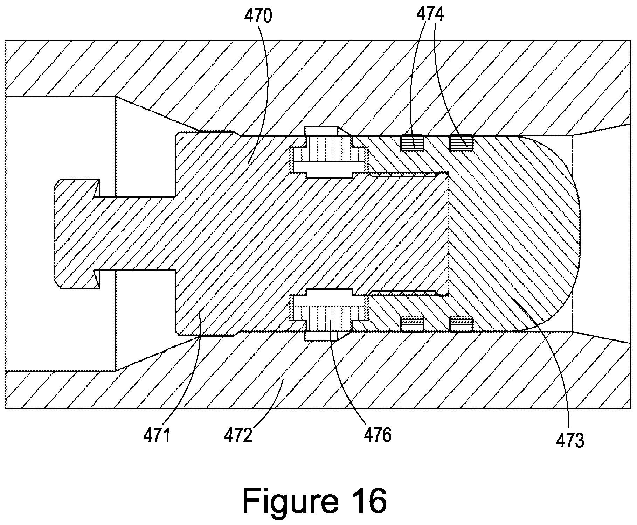

An enlarged view of an activating dart 470 engaged in activation seat 472 of cutting tool 400 is shown in Figure 16. Activating dart 470 is a fishable dart and will land on seat profile 472 which is located just above the pin of tool 400. Dart 470 is sized to fit through the bypass catcher sleeve 420, the cutting tool sliding sleeve 488 and will seal on the seat profile 472. Two redundant seals 474 are provided in the lower section 473 of the dart and a blank sleeve 476 is retained between the upper section 471 and lower section 473 which are threadedly connected.

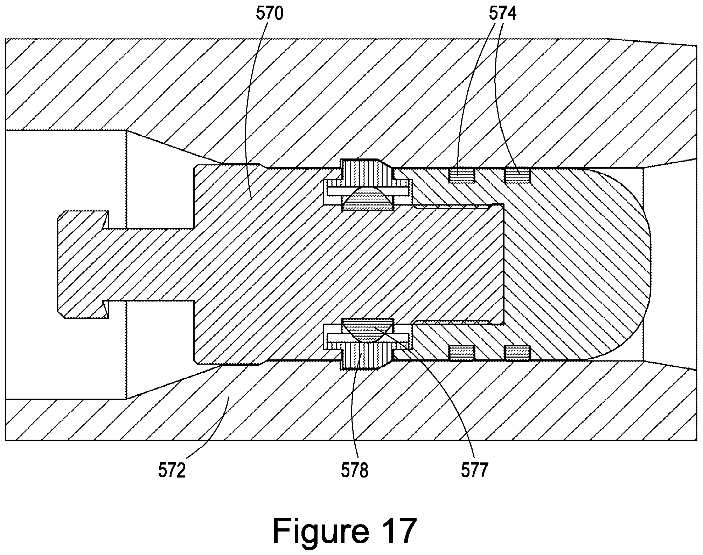

Alternative activating dart 570 is provided in Figure 17. Activating dart 570 is also sized to pass through bypass catcher sleeve 420 and sliding sleeve 488 and comprises latching dogs 578 which are biased outwards by ring member 577. Ring member 577 may comprise, for example, hard rubber. Activating dart 570 is not fishable because latches 578 will hold the dart in place with seat profile 572. Seal 574 provide for pressure to be held from below. In certain circumstances, it may be extremely desirable to plug and seal off the tool internally prior to severance.

An activating dart which is both fishable and able to seal off pressure from below is also envisaged.

It may be desirable to prevent erroneous activation of the cutting tools of the present disclosure. In a drilling environment, severe vibrations of the string could weaken the shear pins of the cutting tool, especially jarring which is likely to happen in the event of the drill string being stuck. Therefore, at least one safety mechanism may be used in conjunction with the cutting tool in order to prevent activation.

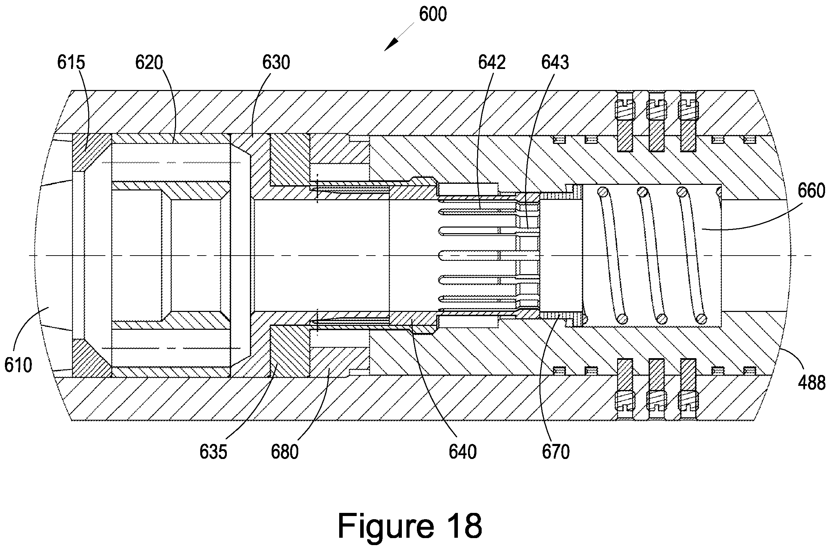

Figure 18 shows an example of a safety mechanism which can located within sliding sleeves 488. The safety mechanism works to prevent the shear pins 389, 289 from shearing by preventing the sleeve from being able to move up or down until the correctly sized activating dart 470 passes through the safety mechanism to release it. The activating dart 470 will be exactly the right diameter and profile to release the safety mechanism.

Safety mechanism 600 comprises a tapered sleeve 615 which is shimmied to provide a perfect axial fit and a bypass catcher sleeve 620 which is essentially the same as bypass catcher sleeve 420. A retaining collet 640 is positioned within the mechanism 600 with a profiled sleeve 635 configured to fit around the retaining collet. A tapered spacer sleeve 680 is provided and is shimmied to retain the collet 640 and sliding sleeve 488 in position. Spacer sleeve 680 sits on a small shoulder provided in the body of the cutting tool 400. A further profiled spacer 630 is also provided so that it is sized to provide the correct fit between the bypass catcher sleeve 620 and the profiled sleeve 635.

Retaining collet 640 comprises retaining collet fingers which are recessed into a groove provided on the sliding sleeve 488. This prevents the sliding sleeve 488 from moving until activated. The collet seat 642 comprises a ring which sits inside the retaining collet fingers 644, preventing release of the fingers. At the opposite end of the collet seat, a spring-loaded collet is provided which is biased radially outwardly and is initially prevented from moving radially outwards by the bore of sleeve 488. Collet seat fingers 643 protrude inwardly into the bore such that when an activating dart lands on them, the dart would push them downwards as it lands on the collet seat 642. An L-shaped spring washer 670 and spring 660 is provided to urge the collet seat fingers 643 upwards from below, thus acting to prevent retaining collet fingers from releasing the sleeve 488 until it is desired to do so.

When cutting is required, activating dart 470 is dropped downhole and the dart will pass through the bypass catcher sleeve 620 landing on collet seat 642. This will push the collet seat fingers 643 downwards, compressing the spring 660. As the spring 660 is compressed, the collet seat 642 will stop supporting the retaining collet fingers 644 allowing them to release. The collet seat fingers 643 will move radially outwards into the recess of the spring cavity, releasing the dart to travel onwards to the dart seat 472 to activate the cutting tool. Since collet seat fingers 643 are biased outwardly, they will latch into the spring recess, leaving the retaining collet fingers 644 free. Activating dart 470 will land on dart seat 472, and the tool can be pressured up to shear the shear pins 489 to sever the pipe as desired.

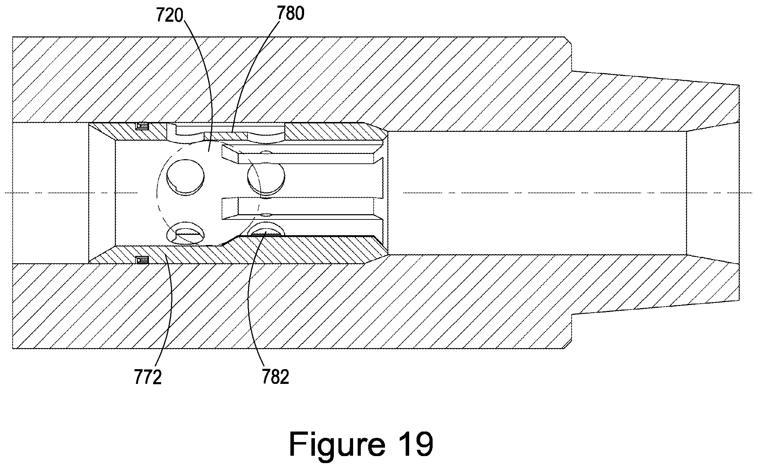

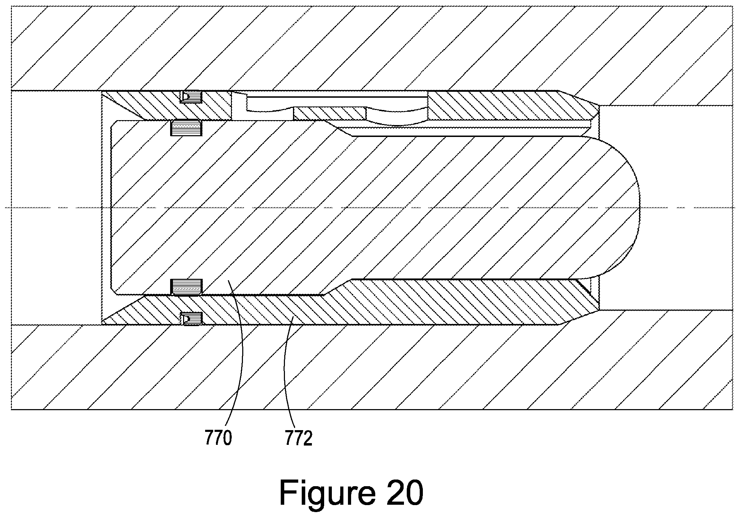

A further safety mechanism may be provided in the form of a vented seat 772 for receiving the activation dart, as shown in Figure 19. Vented seat 772 will be positioned below the cutting tool, as per seat 420 and can provide an additional means to prevent activation of the cutting tool against accidental activation. If a ball 720 of exactly the same diameter of the activating dart 770 is dropped, this would not activate the cutting tool because the seat 772 provides for venting around such a ball 720 by the provision of vent holes 782 and bypass 780. For example, if the vented seat 720 is combined with the safety mechanism 600 and the cutting tool 400, in the event of a ball 720 passing through the bypass catcher sleeve 620, the ball would may unlock the safety mechanism 600 but it would not allow for activation of the tool 400. In the event of slightly smaller diameter ball being dropped downhole, the safety mechanism 600 would not unlock but the seat 772 would catch still catch the smaller ball and activation of the cutting tool would still be prevented. Figure 20 illustrates a correctly sized activating dart 770 engaged with the seat 772. The dart 770 will seal with the seat 772 and allow for the tool to pressured up to activate the cutting tool.

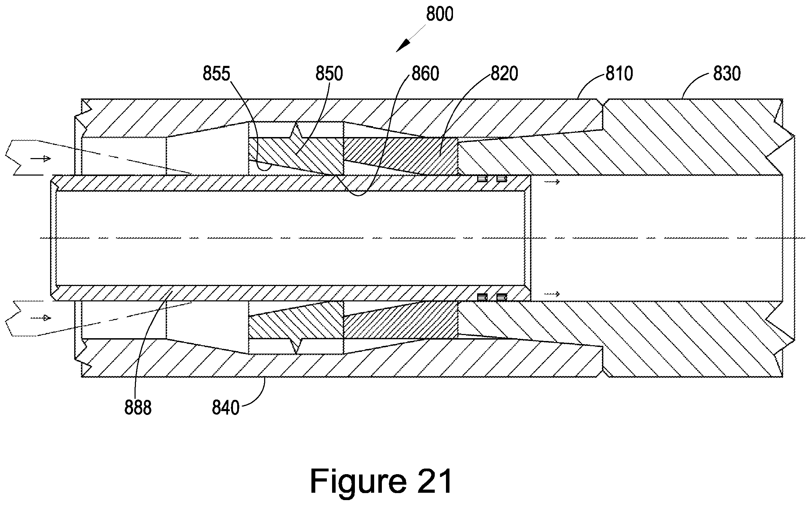

An alternative cutting arrangement 800 is illustrated in Figure 21 where the cutting implement is a segmented knife 850 that is orientated to point radially outwards. The knife 850 is formed from a hard material, for example, ceramic, tungsten or hardened steel. The segments have a tapered inner bore 855 which has a mating taper 860 on the far end on the inside of movable sleeve 888. A support ring 820 positioned behind the knife 850 is also formed from a very hard material in order facilitate the diversion of all of the linear momentum generated by the sleeve moving into sideways motion for the knife 850.

The tool may be activated similarly to previous examples, wherein the sleeve is rapidly accelerated to a high speed. The momentum generated from this movement forces the knife 850 outwards on impact through use of a wedging effect. The point 840 at which the knife pierces the wall is relatively thin. This may present an issue in deep water wells where the hydrostatic pressure may approach the collapse pressure of the body. The tool 800 is shown comprising a pin 830 and box 810 connection which may allow for easier machining of the inner groove because of its proximity to the end. The end of the pin 830 can also be utilised as a stopper. Whilst in the examples shown, the tool is activated using an activating device, it will be appreciated that alternative forms of activation are also envisaged. For example, the tool may be activated using various signals, for example RFIDs, pressure pulses, accelerometers, or any form of remote signals suitable for use in activating downhole tools. These may be used alternatively to or in combination with an activation device.

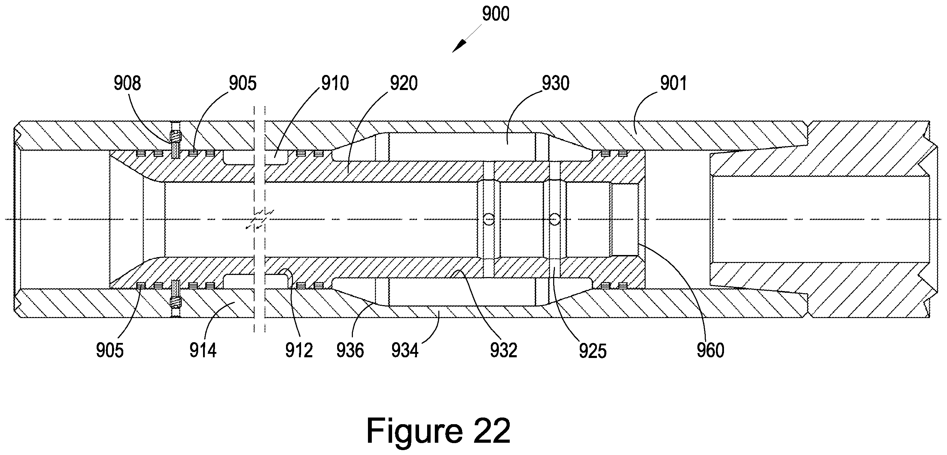

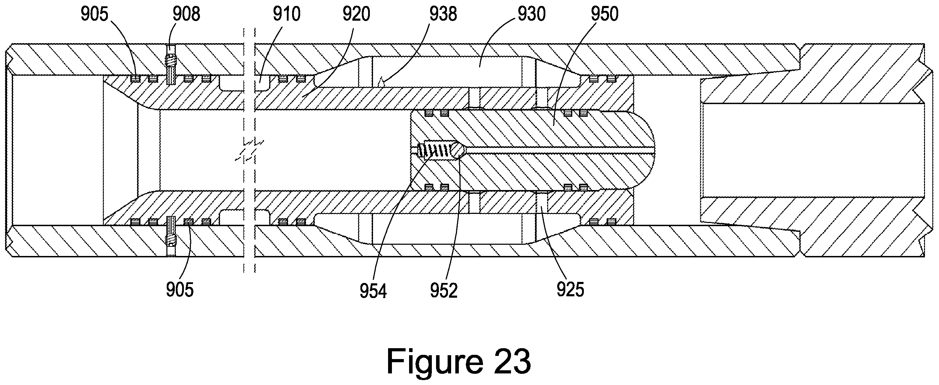

An alternative cutting tool which utilises hydrostatic pressure to sever the pipe body and thus the string by collapsing a chamber formed within the tool is shown in Figures 22 to 24. The tool 900 comprises an elongate sliding sleeve 920 which forms a first chamber 910 and a second chamber 930 between the sleeve 920 and the body 901. The sleeve 920 is initially retained by several radially spaced shear pins 908 near the top (left hand side of the tool in Figure 22) end of the tool. The shear pins 908 are similar to those described in previous examples which are selected to shear upon exposure to a selected pressure, although shear pins 908 are not required to be as strong as previous examples.

The first chamber 910 contains air at atmospheric pressure and is securely sealed by seals 905 at either end of the chamber 910. As an example, the inner wall 912 of the first chamber 910 may be 4.75 in (121mm) × 3.35 in (85mm) which if formed from standard API material with a 830 MPa (120 ksi) yield means the inner wall can withstand 35 ksi collapse pressure (241 MPa). The outer wall 914 of the first chamber may be 8.5 in (216mm) × 6.0 in (152 mm) and has a similar collapse pressure of 30 ksi (207 MPa).

The second chamber 930 is configured to have a stronger inner wall 932. The second chamber 930 is vented to the inside of the tool 900 by 2x4 ports 925 formed in the sleeve 920. The outer wall 934 has a groove 936 which is angled and has an internal radius to minimise the stress concentration at this change of section of the body 901. This means that the outer wall 934 of the second chamber is thinner walled, compared to the outer wall 914 of the first chamber. The outer wall 934 may be 8.5 in (216 mm) × 7.5 in (190 mm) and having a collapse pressure of 13.3 ksi (92MPa). However, whilst this outer wall 934 is relatively thin, it will still be extremely strong and able to hold 1.5 million pounds force (682 Tonnes). There will also be no issues with torque because of the large diameters.

The tool 900 may be used in deep water drilling where for example, the hydrostatic pressure is 104 -140 MPa (15-20 ksi). If the tool 900 was to become stuck, or if it was decided to sever the pipe and abandon the BHA, activating dart 950 may be dropped downhole. Dart 950 will land on seat 960 and seal off the ports 925 in the sleeve 920. With the dart 950 in this position, the second chamber 930 is now completely sealed off with a volume of mud at least hydrostatic pressure, for example 117 MPa (17 ksi). Assuming that the string is not plugged off, applying pressure from above to a pre-selected value will shear the shear pins 908 and the sleeve 920 will translate downwards. A ball 952 and a weak spring 954 are provided in the activating dart 950 to allow for pressure to be relieved from below such that in the event that the string was plugged from below, repeatedly pressuring up from surface would shift the sleeve 920 bit by bit.

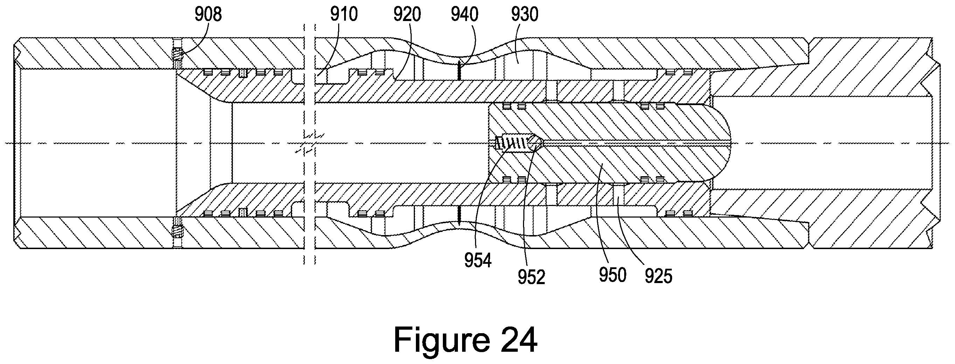

When the sleeve 920 has moved to its final position as shown in Figure 24, the first chamber 910 will be in fluid communication with the second chamber 930 such that high pressure mud from the second chamber 930 will leak into the first chamber 910 and the second chamber will depressurise down to atmospheric pressure. The outer wall 934 of the second chamber 930 is configured such that it will not be able to withstand hydrostatic pressure from outside of the tool and the wall 934 will collapse radially inwards. The volume of the first chamber 910 is selected to maximise the inward movement of the outer wall 934 of the second chamber 930 as the second chamber depressurises. The inward collapse of the outer wall 934 is configured such that the wall at this point may sever. If the body 901 does not fully sever, an overpull and torque can be applied to the body 901 facilitating complete separation at this point.

It will be appreciated that alternative forms of activation are also envisaged for tool 900. For example, the tool 900 may be activated using various signals, for example RFIDs, pressure pulses, accelerometers, or any form of remote signals suitable for use in activating downhole tools. These may be used alternatively to or in combination with an activation device.

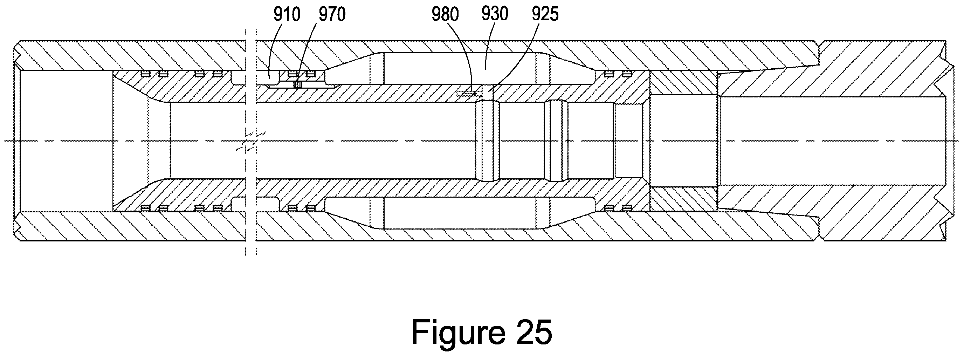

Alternatively, the second chamber may be configured to be sealed by closing a valve 980 in communication with vent 925. The apparatus may comprise a valve 970 located between the first 910 and second chambers 930 as shown in Figure 25, wherein a valve member is moved to an open position once the second chamber is sealed, in order to allow fluid communication between the first and second chambers. With the valve member 970 in the open position, the second chamber will depressurise down to atmospheric pressure and the outer wall of the chamber will collapse radially inwards. The valves may be, for example, signal operated, or mechanically operated.

It may also be useful to include a cutting instrument within the second chamber 930, such as a knife 938. The knife 938 may be singular, or a multiple of the full circumference to assist in severing the tool 900. The outer wall 934 inner surface will already be highly stressed and plastically stretched due to over-stressing as the chamber 930 collapses, this may result in crack 940 occurring in the outer wall 934. The cutting implement 938 could also provide the crack 940.

The diameters of the tool provided above are merely exemplary and can be modified to change the working pressure envelope. For example, the material selected for use in the tool could be stronger (for example, 1035 MPa (150 ksi)) or weaker (for example, 656 MPa (95 ksi)) to suit well hydrostatics. However, this particular embodiment may be more suited for use in large deep-water wells. In low pressure wells, the outer wall of the second chamber would need to be sufficiently thin to enable over-stressing and this thickness may or may not be suitably strong enough for normal use, for example the outer wall may end up being weaker than a downhole connection in the well.

Although cutting tool 900 is effectively fail safe in that, in the event that the sleeve were to shift inadvertently, the pipe would not sever because the energy would dissipate harmlessly since the ports 925 would not be sealed, it may still be desirable to provide tool 900 in combination with the secondary activation mechanisms outlined above. For example, the tool 900 may be provides with a bypass valve seat similar to 620, a retaining collet similarly arranged as retaining collet 640, and/or the activation profile may be vented such that only the correct activation device seals on the profile. This is in contrast with the other cutting tools described where inadvertent activation of the tool would result in the pipe being cut.

Whilst the above examples have been described using shear pins as releasable retaining means for the sleeves, the skilled person can appreciate that any suitable form of releasable retaining means could be utilised instead of, or in conjunction with the shear pins. For example, a releasable collet arrangement may be configured to release the sleeve under the conditions described above.

## Claims

1. Downhole apparatus comprising:
a tubular body (42) for incorporation in a tubing string (24), the body (42) defining a through bore (46);
at least one float valve (30) mounted in the tubular body (42) and operable to prevent flow up through the tubular body bore (46) while permitting flow down through the bore (46); and
a float valve retainer (38) initially configurable to maintain the float valve in an inoperable configuration and permitting flow up the tubular body bore (46) and down through the body bore (46) while the retainer is exposed to pressure below a selected absolute pressure from fluid in the tubular body bore (46) and the retainer (38) being reconfigurable to permit operation of the float valve (30) to prevent flow up through the tubular body bore (46) while permitting flow down through the body bore (46) on exposure of the retainer to the selected absolute pressure comprising hydrostatic pressure from fluid in the tubular body through bore (46).

2. The apparatus of claim 1, wherein the float valve retainer (284) comprises a retaining member (288) for maintaining the float valve (230) in the inoperable configuration, the float valve retainer being operatively associated with a chamber (296) containing compressible fluid, and wherein the selected absolute pressure creates a pressure differential sufficient to release and translate the retaining member (288) and compress the compressible fluid contained in the chamber (296).

3. The apparatus of claim 1, wherein the float valve retainer (38) comprises a flow restriction (80) to permit creation of a pressure differential across the restriction (80) and reconfiguring of the retainer (38) to permit operation of the float valve (30), the flow restriction (80) having an inoperable configuration and an operable configuration to permit creation of the pressure differential, the flow restriction (80) maintaining the inoperable configuration until exposed to the selected absolute pressure, and preferably the flow restriction (80) is configured to be subsequently reconfigured from the operative configuration to an inoperative configuration .

4. The apparatus of any of claims 1 to 3, comprising at least two float valves (47,49).

5. The apparatus of claim 3 or 4, wherein the flow restriction comprises one of a valve member and a pivoted flapper (80).

6. The apparatus of claim 5, wherein at least one of: in the inoperative configuration the valve member (80) extends along an axis parallel to a longitudinal axis of the body (42); in the operative configuration the valve member (80) lies perpendicular to a longitudinal axis of the body (42), and wherein the valve member (80) is rotatable from a first retracted inoperative position to an extended operative position and then to a second retracted inoperative position.

7. The apparatus of any of claims 3 to 6, comprising a flow restriction retainer (88) for releasably retaining the flow restriction (80) in the inoperative position, the flow restriction retainer (88) being operatively associated with a chamber (96) containing compressible fluid, and wherein the selected absolute pressure creates a pressure differential sufficient to release and translate the flow restriction retainer (88) and compress the compressible fluid contained in the chamber (96).

8. The apparatus of claim 7, wherein the float valve retainer (38) includes a retaining member (66) for holding a float valve member (48,50) off a valve seat (49,51) and preventing the float valve (30) from closing, and preferably wherein the retainer member (66) cooperates with the flow restriction (80) such that a pressure differential across the flow restriction (80) generates a release force on the retainer member (66), or wherein the retainer member (66) is releasably retained in a first position, and is movable from the first position to allow the float valve (30) to close, and preferably wherein the retainer member (66) is releasably retained by shear couplings (68).

9. The apparatus of claim 2, or claims 7 or 8, wherein the chamber (96) contains air at atmospheric pressure.

10. A downhole method comprising:
(a) running a tubular string (24) having a through bore (46) part-way into a bore hole (20) with a float valve (30) in the string (24) maintained in an inoperable configuration and permitting fluid to flow from the bore hole (20) into the string bore (46);
(b) pumping fluid down the string bore (46) and through the float valve (30) while exposing the float valve (30) to pressure below a selected absolute pressure comprising hydrostatic pressure from fluid in the string bore (46) and maintaining the float valve (30) in the inoperable configuration;
(c) exposing the float valve (30) to the selected absolute pressure to reconfigure the float valve (30) to an operable configuration permitting flow down through the valve (30) and preventing fluid from flowing from the bore hole (20) into the string bore (46).

11. The method of claim 10, comprising at least one of: running the string (24) further into the bore (20) between steps (b) and (c), and between steps (b) and (c) the string self-fills with fluid from the bore; commencing drilling only after completing at least one of step (b) and step (c); at step (c), running the float valve (30) to a location in the bore (20) where the float valve experiences a hydrostatic pressure and pumping fluid into the string to increase the pressure in the string whereby the cumulative hydrostatic pressure and pump pressure provides the selected absolute pressure; following step (c), biasing the operative float valve (30) towards a closed configuration whereby the operative float valve is normally closed; following step (c), maintaining the operative float valve (30) closed in the absence of flow through the string (24); and following step (c), opening the operative float valve (30) by pumping fluid down through the string (24).

12. The method of any of claims 10 or 11, further comprising, at step (c):
reconfiguring a flow restriction (80) associated with the float valve (30) from an inoperative configuration to an operative configuration in response to the selected absolute pressure; and
pumping fluid down the string (24) to create a pressure differential across the flow restriction (80) and thereby reconfiguring the float valve (30) to the operable configuration.

13. The method of claim 12, comprising, at step (c), at least one of: running the string (24) further into the bore (20) between reconfiguring the flow restriction (80) and pumping fluid down the string (24) to create a pressure differential across the flow restriction; reconfiguring the flow restriction (80) from the operative configuration to an inoperative configuration; rotating the flow restriction (80) between the inoperative configuration and the operative configuration; rotating the flow restriction (80) between the inoperative configuration and the operative configuration, and at or following step (c), rotating the flow restriction to a second inoperative position; translating a flow restriction retainer (88) to release the flow restriction (80) and permit the flow restriction to move from the inoperative configuration to the operative configuration; pumping fluid down the string (24) to create a pressure differential across the operative flow restriction (80) and generating a release force and operating a float valve retainer (66) to reconfigure the float valve (30) to the operable configuration.

14. The method of claim 12 or 13, wherein, at step (c), pumping fluid down the string (24) to create a pressure differential across the operative flow restriction (80) generates a release force and operates a float valve retainer (66) to reconfigure the float valve (30) to the operable configuration, wherein the operative flow restriction (80) engages the float valve retainer (66) and axially translates the float valve retainer (66), and preferably comprising releasably retaining the float valve retainer (66) relative to the float valve (30) and, at step (d), releasing the float valve retainer from the float valve.

15. The method of any of claims 12 to 14, comprising, at step (c), reducing the volume of a compressible fluid-containing chamber (96) operatively associated with the float valve (30) and wherein the selected absolute pressure creates a pressure differential sufficient to release and translate a flow restriction retainer (88) to compress the fluid in the chamber (96), and preferably comprising at least partially filling the chamber (96) with air at atmospheric pressure.

## Patentansprüche

1. Bohrlocheinrichtung, umfassend:
einen rohrförmigen Körper (42) zum Einbau in einen Rohrstrang (24), wobei der Körper (42) eine Durchgangsbohrung (46) definiert;
mindestens ein Schwimmerventil (30), das in dem rohrförmigen Körper (42) montiert ist und betreibbar ist, um einen Durchfluss nach oben durch die rohrförmige Körperbohrung (46) zu verhindern, während es einen Durchfluss nach unten durch die Bohrung (46) zulässt; und
einen Schwimmerventilhalter (38), der anfänglich konfigurierbar ist, um das Schwimmerventil in einer Nichtbetriebskonfiguration zu halten und Durchfluss nach oben durch die rohrförmige Körperbohrung (46) und nach unten durch die Körperbohrung (46) zuzulassen, während der Halter einem Druck unterhalb eines ausgewählten absoluten Drucks von Fluid in der rohrförmigen Körperbohrung (46) ausgesetzt ist und der Halter (38) rekonfigurierbar ist, um den Betrieb des Schwimmerventils (30) zuzulassen, um den Durchfluss nach oben durch die rohrförmige Körperbohrung (46) zu verhindern, während er den Durchfluss nach unten durch die Körperbohrung (46) zulässt, wenn der Halter dem ausgewählten absoluten Druck ausgesetzt ist, der einen hydrostatischen Druck von Fluid in der rohrförmigen Körperdurchgangsbohrung (46) umfasst.

2. Einrichtung nach Anspruch 1, wobei der Schwimmerventilhalter (284) ein Rückhalteelement (288) umfasst, um das Schwimmerventil (230) in der Nichtbetriebskonfiguration zu halten, wobei der Schwimmerventilhalter betreibbar einer Kammer (296) zugeordnet ist, die komprimierbares Fluid enthält, und wobei der ausgewählte absolute Druck eine Druckdifferenz erzeugt, die ausreicht, um das Rückhalteelement (288) zu lösen und zu verschieben und das in der Kammer (296) enthaltene komprimierbare Fluid zu komprimieren.

3. Einrichtung nach Anspruch 1, wobei der Schwimmerventilhalter (38) eine Durchflussbegrenzung (80) aufweist, um die Erzeugung einer Druckdifferenz über die Begrenzung (80) und die Rekonfiguration des Halters (38) zuzulassen, um den Betrieb des Schwimmerventils (30) zuzulassen, wobei die Durchflussbegrenzung (80) eine Nichtbetriebskonfiguration und eine Betriebskonfiguration aufweist, um die Erzeugung der Druckdifferenz zuzulassen, wobei die Durchflussbegrenzung (80) die Nichtbetriebskonfiguration beibehält, bis sie dem ausgewählten absoluten Druck ausgesetzt wird, und vorzugsweise ist die Durchflussbegrenzung (80) so konfiguriert, dass sie anschließend von der Betriebskonfiguration in eine Nichtbetriebskonfiguration rekonfiguriert wird.

4. Einrichtung nach einem der Ansprüche 1 bis 3, umfassend mindestens zwei Schwimmerventile (47, 49).

5. Einrichtung nach Anspruch 3 oder 4, wobei die Durchflussbegrenzung eines von einem Ventilelement
oder einer Schwenkklappe (80) umfasst.

6. Einrichtung nach Anspruch 5, wobei mindestens eines von: in der Nichtbetriebskonfiguration das Ventilelement (80) sich entlang einer Achse parallel zu einer Längsachse des Körpers (42) erstreckt; in der Betriebskonfiguration das Ventilelement (80) senkrecht zu einer Längsachse des Körpers (42) liegt, und wobei das Ventilelement (80) von einer ersten eingefahrenen Nichtbetriebsposition zu einer ausgefahrenen Betriebsposition und dann zu einer zweiten eingefahrenen Nichtbetriebsposition drehbar ist.

7. Einrichtung nach einem der Ansprüche 3 bis 6, umfassend einen Durchflussbegrenzungshalter (88) zum lösbaren Halten der Durchflussbegrenzung (80) in der Nichtbetriebsposition, wobei der Durchflussbegrenzungshalter (88) betreibbar einer Kammer (96) zugeordnet ist, die komprimierbares Fluid enthält, und wobei der ausgewählte absolute Druck eine Druckdifferenz erzeugt, die ausreicht, um den Durchflussbegrenzungshalter (88) zu lösen und zu verschieben und das in der Kammer (96) enthaltene komprimierbare Fluid zu komprimieren.

8. Einrichtung nach Anspruch 7, wobei der Schwimmerventilhalter (38) ein Rückhalteelement (66) einschließt, um ein Schwimmerventilelement (48, 50) von einem Ventilsitz (49, 51) fernzuhalten und das Schließen des Schwimmerventils (30) zu verhindern, und wobei vorzugsweise das Rückhalteelement (66) mit der Durchflussbegrenzung (80) zusammenwirkt, sodass eine Druckdifferenz über die Durchflussbegrenzung (80) Lösekraft auf das Rückhalteelement (66) erzeugt, oder wobei das Rückhalteelement (66) lösbar in einer ersten Position gehalten wird und aus der ersten Position bewegbar ist, um ein Schließen des Schwimmerventils (30) zu ermöglichen, und wobei das Rückhalteelement (66) vorzugsweise durch Scherkupplungen (68) lösbar gehalten wird.

9. Einrichtung nach Anspruch 2 oder nach Anspruch 7 oder 8, wobei die Kammer (96) Luft bei atmosphärischem Druck enthält.

10. Bohrlochverfahren, umfassend:
(a) Führen eines rohrförmigen Strangs (24), der eine Durchgangsbohrung (46) aufweist, teilweise in eine Bohrung (20), wobei ein Schwimmerventil (30) in dem Strang (24) in einer Nichtbetriebskonfiguration gehalten wird und den Durchfluss von Fluid aus dem Bohrloch (20) in die Strangbohrung (46) zulässt;
(b) Pumpen von Fluid nach unten in die Strangbohrung (46) und durch das Schwimmerventil (30), während das Schwimmerventil (30) einem Druck unterhalb eines ausgewählten absoluten Drucks, der hydrostatischen Druck von Fluid in der Strangbohrung (46) umfasst, ausgesetzt wird, und Halten des Schwimmerventils (30) in der Nichtbetriebskonfiguration;
(c) Aussetzen des Schwimmerventils (30) dem ausgewählten absoluten Druck, um das Schwimmerventil (30) in eine Betriebskonfiguration zu konfigurieren, die einen Durchfluss nach unten durch das Ventil (30) zulässt und verhindert, dass Fluid aus dem Bohrloch (20) in die Strangbohrung (46) fließt.

11. Verfahren nach Anspruch 10, umfassend mindestens eines von: Führen des Strangs (24) weiter in das Bohrloch (20) zwischen den Schritten (b) und (c), und zwischen den Schritten (b) und (c) füllt sich der Strang selbst mit Fluid aus dem Bohrloch; Beginnen des Bohrens erst nach Abschluss von mindestens einem der Schritte (b) und (c); in Schritt (c) Führen des Schwimmerventils (30) zu einer Stelle im Bohrloch (20), an der das Schwimmerventil einen hydrostatischen Druck erfährt, und Pumpen von Fluid in den Strang, um den Druck im Strang zu erhöhen, wodurch der kumulative hydrostatische Druck und der Pumpendruck den ausgewählten absoluten Druck bereitstellen; im Anschluss an Schritt (c) Vorspannen des betreibbaren Schwimmerventils (30) zu einer geschlossenen Konfiguration, wodurch das betreibbare Schwimmerventil normalerweise geschlossen ist; im Anschluss an Schritt (c) Halten des betreibbaren Schwimmerventils (30) in Abwesenheit von Durchfluss durch den Strang (24) geschlossen; und im Anschluss an Schritt (c) Öffnen des betreibbaren Schwimmerventils (30) durch Pumpen von Fluid nach unten durch den Strang (24).

12. Verfahren nach einem der Ansprüche 10 oder 11, weiter umfassend, in Schritt (c):
Rekonfigurieren einer Durchflussbegrenzung (80), die dem Schwimmerventil (30) zugeordnet ist, aus einer Nichtbetriebskonfiguration in eine Betriebskonfiguration als Reaktion auf den ausgewählten absoluten Druck; und
Pumpen von Fluid nach unten durch den Strang (24), um eine Druckdifferenz über die Durchflussbegrenzung (80) zu erzeugen und dadurch das Schwimmerventil (30) in die Betriebskonfiguration zu konfigurieren.

13. Verfahren nach Anspruch 12, umfassend in Schritt (c) mindestens eines von: Führen des Strangs (24) weiter in das Bohrloch (20) zwischen dem Rekonfigurieren der Durchflussbegrenzung (80) und dem Pumpen von Fluid nach unten durch den Strang (24), um eine Druckdifferenz über der Durchflussbegrenzung zu erzeugen; Rekonfigurieren der Durchflussbegrenzung (80) aus der Betriebskonfiguration in eine Nichtbetriebskonfiguration; Drehen der Durchflussbegrenzung (80) zwischen der Nichtbetriebskonfiguration und der Betriebskonfiguration; Drehen der Durchflussbegrenzung (80) zwischen der Nichtbetriebskonfiguration und der Betriebskonfiguration, und bei oder im Anschlauss an Schritt (c) Drehen der Durchflussbegrenzung in eine zweite Nichtbetriebsposition; Verschieben eines Durchflussbegrenzungshalters (88), um die Durchflussbegrenzung (80) zu lösen und zuzulassen, dass sich die Durchflussbegrenzung aus der Nichtbetriebskonfiguration in die Betriebskonfiguration bewegt; Pumpen von Fluid nach unten durch den Strang (24), um eine Druckdifferenz über die betreibbare Durchflussbegrenzung (80) zu erzeugen und eine Lösekraft zu erzeugen, und Betreiben eines Schwimmerventilhalters (66), um das Schwimmerventil (30) in die Betriebskonfiguration zu rekonfigurieren.

14. Verfahren nach Anspruch 12 oder 13, wobei in Schritt (c) das Pumpen von Fluid nach unten durch den Strang (24) zur Erzeugung einer Druckdifferenz über die betreibbare Durchflussbegrenzung (80) eine Lösekraft erzeugt und einen Schwimmerventilhalter (66) betreibt, um das Schwimmerventil (30) in die Betriebskonfiguration zu rekonfigurieren, wobei die betreibbare Durchflussbegrenzung (80) in den Schwimmerventilhalter (66) eingreift und den Schwimmerventilhalter (66) axial verschiebt, und umfassend das lösbare Halten des Schwimmerventilhalters (66) relativ zu dem Schwimmerventil (30) und, in Schritt (d), Lösen des Schwimmerventilhalters von dem Schwimmerventil.

15. Verfahren nach einem der Ansprüche 12 bis 14, umfassend in Schritt (c) das Reduzieren des Volumens einer komprimierbares Fluid enthaltenden Kammer (96), die dem Schwimmerventil (30) betreibbar zugeordnet ist, und wobei der ausgewählte absolute Druck eine Druckdifferenz erzeugt, die ausreicht, um einen Durchflussbegrenzungshalter (88) zu lösen und zu verschieben, um das Fluid in der Kammer (96) zu komprimieren, und vorzugsweise umfassend das zumindest teilweise Füllen der Kammer (96) mit Luft bei atmosphärischem Druck.

## Revendications

1. Appareil de fond de puits comprenant :
un corps tubulaire (42) pour l'intégration dans une colonne de production (24) ; le corps (42) définissant un alésage traversant (46) ;
au moins un clapet à flotteur (30) monté dans le corps tubulaire (42) et opérationnel pour empêcher l'écoulement ascendant à travers l'alésage de corps tubulaire (46) tout en permettant l'écoulement descendant à travers l'alésage (46) ; et
un dispositif de retenue de clapet à flotteur (38) initialement configurable pour maintenir le clapet à flotteur dans une configuration non opérationnelle et permettant l'écoulement ascendant de l'alésage de corps tubulaire (46) et descendant à travers l'alésage de corps (46), tandis que le dispositif de retenue est exposé à la pression en dessous d'une pression absolue sélectionnée provenant du fluide dans l'alésage de corps tubulaire (46) et le dispositif de retenue (38) étant reconfigurable pour permettre le fonctionnement du clapet à flotteur (30) afin d'empêcher l'écoulement ascendant à travers l'alésage de corps tubulaire (46) tout en permettant l'écoulement descendant à travers l'alésage de corps (46) lorsque le dispositif de retenue est exposé à la pression absolue sélectionnée comprenant la pression hydrostatique provenant du fluide dans l'alésage traversant de corps tubulaire (46).

2. Appareil selon la revendication 1, dans lequel le dispositif de retenue de clapet à flotteur (284) comprend un élément de retenue (288) destiné à maintenir le clapet à flotteur (230) dans la configuration non opérationnelle, le dispositif de retenue de clapet à flotteur étant associé de manière fonctionnelle à une chambre (296) contenant un fluide compressible, et dans lequel la pression absolue sélectionnée crée un différentiel de pression suffisant pour libérer et translater l'élément de retenue (288) et comprimer le fluide compressible contenu dans la chambre (296).

3. Appareil selon la revendication 1, dans lequel le dispositif de retenue de clapet à flotteur (38) comprend une restriction de débit (80) pour permettre la création d'un différentiel de pression au sein de la restriction (80) et la reconfiguration du dispositif de retenue (38) pour permettre le fonctionnement du clapet à flotteur (30), la restriction de débit (80) présentant une configuration non opérationnelle et une configuration opérationnelle pour permettre la création du différentiel de pression, la restriction de débit (80) conservant la configuration non opérationnelle jusqu'à ce qu'elle soit exposée à la pression absolue sélectionnée, et de préférence la restriction de débit (80) est configurée pour être reconfigurée ultérieurement de la configuration opérationnelle à une configuration non opérationnelle.

4. Appareil selon l'une quelconque des revendications 1 à 3, comprenant au moins deux clapets à flotteur (47, 49).

5. Appareil selon la revendication 3 ou 4, dans lequel la restriction de débit comprend un d'un élément de clapet
et d'un battant pivotant (80).

6. Appareil selon la revendication 5, dans lequel s'applique au moins un des cas suivants : dans la configuration non opérationnelle l'élément de clapet (80) s'étend le long d'un axe parallèle à un axe longitudinal du corps (42) ; dans la configuration opérationnelle l'élément de clapet (80) repose perpendiculaire à un axe longitudinal du corps (42), et dans lequel l'élément de clapet (80) est rotatif d'une première position non opérationnelle rétractée à une position opérationnelle étendue et ensuite à une seconde position non opérationnelle rétractée.

7. Appareil selon l'une quelconque des revendications 3 à 6, comprenant un dispositif de retenue de restriction de débit (88) destiné à retenir de manière amovible la restriction de débit (80) dans la position non opérationnelle, le dispositif de retenue de restriction de débit (88) étant associé de manière opérationnelle à une chambre (96) contenant un fluide compressible, et dans lequel la pression absolue sélectionnée crée un différentiel de pression suffisant pour libérer et translater le dispositif de retenue de restriction de débit (88) et comprimer le fluide compressible contenu dans la chambre (96).

8. Appareil selon la revendication 7, dans lequel le dispositif de retenue de clapet à flotteur (38) comprend un élément de retenue (66) destiné à retenir un élément de clapet à flotteur (48, 50) éloigné d'un siège de clapet (49, 51) et à empêcher la fermeture du clapet à flotteur (30), et de préférence dans lequel l'élément de retenue (66) coopère avec la restriction de débit (80) de telle sorte qu'un différentiel de pression au sein de la restriction de débit (80) génère une force de retour sur l'élément de retenue (66), ou dans lequel l'élément de retenue (66) est retenu de manière amovible dans une première position, et est mobile à partir de la première position pour permettre la fermeture du clapet à flotteur (30), et de préférence dans lequel l'élément de retenue (66) est retenu de manière amovible par des accouplements à frottement (68).

9. Appareil selon la revendication 2, ou les revendications 7 ou 8, dans lequel la chambre (96) contient de l'air à la pression atmosphérique.

10. Procédé de fond de puits comprenant :
(a) la course d'une colonne de production (24) présentant un alésage traversant (46) en partie dans un puits de forage (20) avec un clapet à flotteur (30) dans la colonne (24) maintenue dans une configuration non opérationnelle et permettant l'écoulement de fluide du puits de forage (20) dans l'alésage de colonne (46) ;
(b) le pompage du fluide vers le bas de l'alésage de colonne (46) et à travers le clapet à flotteur (30) tout en exposant le clapet à flotteur (30) à une pression inférieure à une pression absolue sélectionnée comprenant la pression hydrostatique provenant du fluide dans l'alésage de colonne (46) et maintenant le clapet à flotteur (30) dans la configuration non opérationnelle ;
(c) l'exposition du clapet à flotteur (30) à la pression absolue sélectionnée pour reconfigurer le clapet à flotteur (30) dans une configuration opérationnelle permettant l'écoulement descendant à travers le clapet (30) et empêchant l'écoulement de fluide du puits de forage (20) dans l'alésage de colonne (46).

11. Procédé selon la revendication 10, comprenant au moins une des étapes suivantes : la course ultérieure de la colonne (24) dans le puits de forage (20) entre les étapes (b) et (c), et entre les étapes (b) et (c), la colonne s'autoremplit de fluide provenant du puits ; le démarrage du forage seulement après l'achèvement d'au moins une des étapes (b) et (c) ; à l'étape (c), la course du clapet à flotteur (30) vers un emplacement dans le puits (20) dans lequel le clapet à flotteur est soumis à une pression hydrostatique et le pompage de fluide dans la colonne pour augmenter la pression dans la colonne, la pression hydrostatique cumulée et la pression de pompe fournissant la pression absolue sélectionnée ; l'étape suivante (c), la poussée du clapet à flotteur opérationnel (30) vers une configuration fermée, le clapet à flotteur opérationnel étant normalement fermé ; l'étape suivante (c), le maintien du clapet à flotteur opérationnel (30) fermé en l'absence d'écoulement à travers la colonne (24) ; et l'étape suivante (c), l'ouverture du clapet à flotteur opérationnel (30) par le pompage de fluide vers le bas de la colonne (24).

12. Procédé selon l'une quelconque des revendications 10 ou 11, comprenant en outre, à l'étape (c) :
la reconfiguration d'une restriction de débit (80) associée au clapet à flotteur (30) d'une configuration non opérationnelle à une configuration opérationnelle en réponse à la pression absolue sélectionnée ; et
le pompage de fluide vers le bas de la colonne (24) pour créer un différentiel de pression au sein de la restriction de débit (80) et reconfigurant ainsi le clapet à flotteur (30) dans la configuration opérationnelle.

13. Procédé selon la revendication 12, comprenant, à l'étape (c), au moins une des étapes suivantes : la course ultérieure de la colonne (24) dans le puits (20) entre la reconfiguration de la restriction de débit (80) et le pompage de fluide vers le bas de la colonne (24) pour créer un différentiel de pression au sein de la restriction de débit ; la reconfiguration de la restriction de débit (80) de la configuration opérationnelle à une configuration non opérationnelle ; la rotation de la restriction de débit (80) entre la configuration non opérationnelle et la configuration opérationnelle ; la rotation de la restriction de débit (80) entre la configuration non opérationnelle et la configuration opérationnelle, et/ou à l'étape (c), la rotation de la restriction de débit dans une seconde position non opérationnelle ; la translation d'un dispositif de retenue de restriction de débit (88) pour libérer la restriction de débit (80) et permettre à la restriction de débit de se déplacer de la configuration non opérationnelle à la configuration opérationnelle ; le pompage de fluide vers le bas de la colonne (24) pour créer un différentiel de pression au sein de la restriction de débit opérationnelle (80) et la production d'une force de retour et le fonctionnement d'un dispositif de retenue de clapet à flotteur (66) pour reconfigurer le clapet à flotteur (30) dans la configuration opérationnelle.

14. Procédé selon la revendication 12 ou 13, dans lequel, à l'étape (c), le pompage de fluide vers le bas de la colonne (24) pour créer un différentiel de pression au sein de la restriction de débit produit une force de retour et active un dispositif de retenue de clapet à flotteur (66) pour reconfigurer le clapet à flotteur (30) dans la configuration opérationnelle, dans lequel la restriction de débit opérationnelle (80) entre en prise avec le dispositif de retenue de clapet à flotteur (66) et translate axialement le dispositif de retenue de clapet à flotteur (66), et comprenant de préférence la retenue amovible du dispositif de retenue de clapet à flotteur (66) par rapport au clapet à flotteur (30) et, à l'étape (d), le dégagement du dispositif de retenue de clapet à flotteur du clapet à flotteur.

15. Procédé selon l'une quelconque des revendications 12 à 14, comprenant, à l'étape (c), la réduction du volume d'une chambre contenant un fluide compressible (96) associé de manière opérationnelle au clapet à flotteur (30) et dans lequel la pression absolue sélectionnée crée un différentiel de pression suffisant pour libérer et translater un dispositif de retenue de restriction de débit (88) pour comprimer le fluide dans la chambre (96), et comprenant de préférence au moins le remplissage partiel de la chambre (96) avec de l'air à la pression atmosphérique.
